# EUROPÄISCHE PATENTSCHRIFT

(11) **EP 4 337 137 B1**
(45) Veröffentlichungstag und Bekanntmachung des Hinweises auf die Patenterteilung: **30.09.2026**
(21) Anmeldenummer: 22718991.7
(22) Anmeldetag: 04.04.2022
(51) Int. Cl.: A61C 13/10, A61C 13/103, A61C 13/08, A61C 13/00, B33Y 10/00, B33Y 30/00, B33Y 80/00

(54) **ZAHNFORMKÖRPER, DENTALPROTHESE, VERFAHREN UND VORRICHTUNG ZUR HERSTELLUNG DER DENTALPROTHESE**
MOLDED DENTAL BODY, DENTAL PROSTHESIS, METHOD AND DEVICE FOR MANUFACTURING THE DENTAL PROSTHESIS
CORPS DE FORME DENTAIRE, PROTHÈSE DENTAIRE, PROCÉDÉ ET DISPOSITIF POUR LA FABRICATION DE LA PROTHÈSE DENTAIRE

(30) Priorität: 10.05.2021 DE 102021112178
(43) Veröffentlichungstag der Anmeldung: 20.03.2024
(73) Patentinhaber: Kulzer GmbH, 63450 Hanau (DE)
(72) Erfinder: MÖLLER, Matthias, 88097 Eriskirch (DE); STANGE, Frank-Uwe, 88085 Langenargen (DE); SCHMIDT, Oliver, 64747 Breuberg (DE); BILIC-PAGE, Vesna, 42103 Wuppertal (DE); BERGER, Stephan, 88074 Meckenbeuren (DE)
(74) Vertreter: Kilian Kilian & Partner mbB
(86) Internationale Anmeldenummer: PCT/EP2022/058874
(87) Internationale Veröffentlichungsnummer: WO 2022/238049

(56) Entgegenhaltungen:
- EP-A1- 3 586 790
- EP-A1- 3 586 790
- US-A1- 2017 239 023
- US-A1- 2017 239 023

## Beschreibung

Die Erfindung betrifft ein Verfahren und eine Vorrichtung zur Herstellung von Dentalprothesen sowie einen Zahnformkörper, der zur Umsetzung des Verfahrens geeignet ist und der mit der Vorrichtung herstellbar ist sowie eine Dentalprothese, die mit einem solchen Verfahren hergestellt wird. Die Dentalprothesen werden mit basal bearbeiteten Zahnformkörpern hergestellt, wobei die Dentalprothesen in Form von dentalen Teilprothesen oder Vollprothesen gefertigt werden.

Neben handwerklichen Techniken gewinnen digitale Fertigungsmethoden auch im Dentalbereich immer mehr an Bedeutung. Zahnersatz und andere dentale Formteile, wie zum Beispiel Kronen, Brücken und 3-dimensionale Modelle des Mundraums eines Patienten, werden seit einigen Jahren mittels CAD/CAM-Technologien subtraktiv in Fräsverfahren hergestellt (CAM - Computer-Aided Manufacturing, Deutsch: rechnerunterstützte Fertigung, CAD - Computer-Aided Design, Deutsch: rechnerunterstützte Konstruktion). Auch bei der Herstellung und dem Entwurf von dentalen Teil- und Vollprothesen mit Prothesenbasis zur Auflage auf der Gingiva und darin befestigten oder angeordneten Zahnformkörpern, werden zunehmend CAD/CAM-Verfahren angewendet.

Ferner gewinnen generative CAM-Verfahren wie Stereolithographie und DLP (Digital Light Processing) für Dentalprodukte auf Polymerbasis wie zum Beispiel für Provisorien, Prothesen, KFO-Apparaturen (Kiefer-Orthopädie-Apparaturen), Aufbissschienen, Bohrschablonen oder Dentalmodellen immer mehr an Bedeutung.

Im Rahmen des digitalen Designs von prothetischen Arbeiten, insbesondere von Teil- oder Totalprothesen wird die Konstruktion in einen "weißen" Zahnanteil (die Prothesenzähne oder Zahnformkörper) und einen zahnfleischfarbenen Prothesenbasisanteil (die Prothesenbasis) aufgegliedert.

Es gibt Verfahren, wie beispielsweise die aus der DE 10 2009 056 752 A1 oder der WO 2013/124 452 A1 bekannten Verfahren, bei denen eine dentale Teil- beziehungsweise Totalprothese digital aufgestellt und über CAD/CAM-Verfahren produziert wird. Aus dem Patent DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt. Die EP 2 742 906 A1 offenbart ein Verfahren, bei dem ein Zahnbogen mit einer Abformmasse verbunden wird, wobei die Abformmasse in einem individualisierten Abformlöffel enthalten ist und einen Abdruck der Mundraumsituation des Patienten enthält. Die Oberfläche der Form mit dem Zahnbogen wird digitalisiert und anschließend rechnerisch ein virtuelles Modell des Zahnbogens möglichst passend in dem virtuellen Modell der Prothesenbasis positioniert und orientiert.

Im Rahmen der digitalen Totalprothetik oder Teilprothetik werden Prothesenzähne oder Zahnformkörper benötigt, die sich eindeutig und reproduzierbar mit der Prothesenbasis verkleben lassen.

Die DE 10 2005 014 319 A1 offenbart Prothesenzähne mit einem Hohlraum und mit mesialen und distalen Aussparungen. Der Hohlraum und die Aussparungen dabei dazu, den Aufwand beim basalen Einkürzen der fabrikmäßig hergestellten, vorkonfektionierten Prothesenzähne zu reduzieren und dadurch, den Aufwand für den Zahntechniker beim Bearbeiten der Prothesenzähne zu reduzieren. Hierdurch soll ein Beschleifen und Ausfräsen der Zahnprothesen reduziert werden. Eine Verbesserung der Präzision bei der Positionierung wird hierdurch nicht erreicht. Aus der DE 10 2007 002 178 A1 ist ein Verfahren zur Herstellung einer Dentalprothese bekannt, bei dem Prothesenzähne in eine Prothesenbasis eingeklebt werden. Die Prothesenzähne werden dabei mit einem Rapid-Prototyping-Verfahren hergestellt. Die DE 102015 107 006 A1 offenbart ein Verfahren zur Positionierung von Prothesenzähnen in einer Prothesenbasis mit Hilfe von Stiften und Rastmitteln.

Die US 2017/0239023 A1 offenbart ein Verfahren zur Herstellung einer Dentalprothese, bei dem die Prothesenzähne in einer Prothesenbasis befestigt werden, indem vorstehende Pilzköpfe in den Zahnfächern der Prothesenbasis in Schlitze innerhalb von Vertiefungen in den Prothesenzähnen einrasten. Aus der EP 3 586 790 A1 ist ein Verfahren zum Herstellen einer Dentalprothese bekannt, bei dem künstliche Zähne in flächenbündig passende Flächen einer Prothesenbasis eingesetzt werden. Bei dieser Dentalprothese passt ein vorstehender Abschnitt der Prothesenbasis mit einem vertieften Abschnitt des künstlichen Zahns zusammen, und ein erhöhter Abschnitt der Prothesenbasis passt mit dem ausgeschnittenen Abschnitt des künstlichen Zahns zusammen. Im zusammengesetzten Zustand ergibt sich keine vorstehende seitliche Öffnung im Mantel des künstlichen Zahns.

Die WO 2016/091 762 A1 offenbart ein Verfahren zur Herstellung einer Dentalprothese, bei dem eine Schablone erzeugt wird, mit der mehrere Prothesenzähne in der gewünschten Lage und Orientierung zueinander an einer Prothesenbasis befestigt werden können. Die Prothesenzähne werden dabei durch basales Schleifen in einem zervikalen Bereich eingekürzt, um die gewünschte Bisshöhe herzustellen. Die WO 2016/110 392 A1 offenbart ein Verfahren zur Herstellung einer Dentalprothese, bei dem ein plastisch verformbares Verbindungsmittel in Zahnfächer einer Prothesenbasis eingebracht wird, um eine manuelle Korrektur der Ausrichtung der Prothesenzähne in der Prothesenbasis zu ermöglichen. Aus der DE 10 2008 019 694 B3 ist ein Verfahren und eine Einrichtung zur Herstellung dentaler Körper aus Keramik mit einem Laser bekannt. Aus der EP 2 571 451 B1 und der EP 2 666 438 A2 sind Verfahren zur Herstellung von Dentalprothesen bekannt, bei denen vorkonfektionierte Prothesenzähne in einer Halterung in Wachs eingebettet werden und anschließend zervikal mittels CAM-Verfahren abgefräst werden. Die so gekürzten Prothesenzähne werden von dem Wachs befreit und anschließend in eine Prothesenbasis eingesetzt und dort eingeklebt, um eine Dentalprothese herzustellen. Es ist notwendig, die Prothesenzähne basal zu kürzen, um die Zahnhöhe an den Kiefer des Patienten anzupassen, also um die Bisshöhe der Dentalprothese passend zu den Bedürfnissen des Patienten einzustellen.

Für die Herstellung von digital designten Teil- oder Totalprothesen bestehen derzeit also die folgenden Möglichkeiten:
1) Nachfräsen von in Wachs eingebetteten Zahnformkörpern um die benötigte Kürzung zu erzielen. Dabei entsteht jedoch kein einheitlicher Rotationsschutz und kein gleichmäßiger Klebespalt, so dass eine Verklebung gegebenenfalls mit Hilfsmatrix erfolgen muss.
2) Herbeiführen einer basalen Passung mit Rotationsschutz über die Außengeometrie des Zahnformkörpers unter Verwendung eines sehr kleinen Klebespalts. Geometrisch bedingt ist dann ein Kürzen der Zahnformkörper nicht mehr umsetzbar. Wenn die Außenkonturen der Prothesenbasis zu den Zahnformkörpern leicht voneinander abweichen, ist kein Rotationsschutz, sowie keine definierte Endlage mehr gegeben.
3) Gegebenenfalls können die prothetischen Arbeiten auch aus einem rot-weiß geschichteten einteiligen Blank komplett ohne Fügetechnik gefertigt werden. Dies bedeutet jedoch erhebliche Einschränkungen bezüglich der Ästhetik, Herstellung und Kosten.

Bei vielen auf digitalen Arbeitsweisen basierenden Prozessen kann nicht mit Fixierschlüsseln oder Kontersystemen gearbeitet werden, so dass eine Positionierung rein über die Verschlüsselung des Formkörpers mit der Basis erfolgen muss.

Die geforderte Präzision im Bereich von genauer als 80 µm, bevorzugt genauer als 50 µm, ist mit herkömmlichen künstlichen Zahnformkörpern nicht abzubilden, da diese keine zur präzisen Verschlüsselung geeigneten Geometrien aufweisen.

Eine weitere aktuell ungenügend gelöste Problemstellung ist die vollständige, möglichst saubere Abfuhr von Kleberüberschüssen. Insbesondere bei hohl ausgeformten Geometrien wie Käppchen aber auch in Kavitäten der Basis kann der Kleber zu Vergrößerungen des vordefinierten Klebespalts und damit zu Fehlpassungen der Zahnformkörper in der Prothesenbasis führen. Eine ausreichend genaue Verpassung kann aktuell mangels Kontrollmöglichkeit nur sehr begrenzt nachvollzogen werden.

Auch wenn also die Zahnformkörper sehr genau gefertigt werden, kann es beim Einsetzen und Einkleben der Zahnformkörper in die Prothesenbasis zu Abweichungen kommen, die zu einer ungewünschten Abweichung zwischen dem digitalen virtuellen Modell der Dentalprothese und der körperlichen Dentalprothese führt. Insbesondere die Bisshöhe (die Okklusion) kann dadurch variieren, dass der Klebespalt zwischen dem basalen (zervikalen) Ende der Zahnformkörper und der Aufnahmefläche in der Prothesenbasis nicht immer gleich groß ist. Dies macht eine aufwendige koronale Nachbearbeitung der Zahnformkörper nach dem Verkleben der Zahnformkörper mit der Prothesenbasis notwendig. Die koronale Nachbearbeitung kann dabei auch den ästhetischen Eindruck der Dentalprothese beeinträchtigen.

Nachteilig an den bisherigen Verfahren ist auch, dass der Klebstoff am gesamten Übergang zwischen den Zahnformkörpern und der Prothesenbasis entfernt werden muss, um beim Tragen störende und ästhetisch störende Klebstoffreste entlang des gesamten Marginalsaums zwischen der Prothesenbasis und dem oder den Zahnformkörpern zu verhindern.

Die Aufgabe der Erfindung besteht darin, die Nachteile des Stands der Technik zu überwinden. Insbesondere soll eine Möglichkeit gefunden werden, ein Verfahren und eine Vorrichtung sowie Zahnformkörper bereitzustellen, mit denen eine passgenaue Befestigung von Zahnformkörpern in Prothesenbasen möglich ist, wobei eine durch den Klebstoff verursachte Ungenauigkeit in der Position der Zahnformkörper relativ zu der Prothesenbasis reduziert oder verhindert werden soll. Gleichzeitig soll die Position und die Ausrichtung der Zahnformkörper möglichst genau festgelegt sein, um eine Fehlstellung der Zahnformkörper in der Prothesenbasis zu verhindern. Des Weiteren soll möglichst ein basales Kürzen der Zahnformkörper ermöglich werden, ohne dass die anderen Anforderungen hinsichtlich der Positionierung der Zahnformkörper in der Prothesenbasis verhindert oder erschwert werden. Das Verfahren soll für den Zahntechniker möglichst einfach und unaufwendig umsetzbar sein. Insbesondere sollen vollautomatisierte oder möglichst weitgehend automatisierte Techniken wie CAD/CAM-Technologien genutzt werden und nutzbar sein. Die Nachbearbeitung der Dentalprothese soll dabei möglichst unaufwendig erfolgen können. Es sollen auch möglichst gut reproduzierbare Ergebnisse in gleichbleibend hoher Qualität erzielbar sein. Überschüssiger Klebstoff soll möglichst leicht entfernt werden können, wobei gleichzeitig eine vollflächige Verbindung zwischen der Prothesenbasis und dem mindestens einen Zahnformkörper erzeugt werden soll oder herstellbar sein soll.

Die Aufgaben der Erfindung werden gelöst durch ein Verfahren nach Anspruch 1, eine Vorrichtung nach Anspruch 11,einen Zahnformkörper nach Anspruch 13 und eine Dentalprothese nach Anspruch 15. Bevorzugte Varianten werden mit den Unteransprüchen 2 bis 10, 12 und 14 beansprucht.

Die Aufgaben der Erfindung werden also gelöst durch ein Verfahren zur Herstellung von Dentalprothesen in Form von dentalen Teilprothesen oder Vollprothesen, wobei die Dentalprothese eine Prothesenbasis und zumindest einen Zahnformkörper aufweist und wobei das Verfahren durch die folgenden Schritte gekennzeichnet ist:
A) Herstellen einer Prothesenbasis aus einem zahnfleischfarbenen Kunststoff, wobei die Prothesenbasis mit zumindest einer Aufnahme für zumindest einen Zahnformkörper erzeugt wird und wobei in der zumindest einen Aufnahme ein vorstehender Zapfen erzeugt wird, oder Bereitstellen einer Prothesenbasis aus einem zahnfleischfarbenen Kunststoff, wobei die Prothesenbasis zumindest eine Aufnahme für zumindest einen Zahnformkörper aufweist und wobei in der zumindest einen Aufnahme ein vorstehender Zapfen angeordnet ist;
B) Herstellen oder basales Bearbeiten zumindest eines Zahnformkörpers, wobei in dem zumindest eine Zahnformkörper eine basale Kavität zur Aufnahme des Zapfens erzeugt wird oder der zumindest eine Zahnformkörper eine basale Kavität zur Aufnahme des Zapfens aufweist, wobei eine seitliche Öffnung im Mantel des zumindest einen Zahnformkörpers erzeugt wird, so dass die basale Kavität über die seitliche Öffnung im Mantel des zumindest einen Zahnformkörpers zugänglich ist;
C) Nachfolgendes Auftragen eines Klebstoffs in die basale Kavität des zumindest einen Zahnformkörpers oder in die zumindest eine Aufnahme der Prothesenbasis oder in die basale Kavität des zumindest einen Zahnformkörpers und in die zumindest eine Aufnahme der Prothesenbasis;
D) Nachfolgendes Einsetzen des zumindest einen Zahnformkörpers in die zumindest eine Aufnahme der Prothesenbasis, so dass der vorstehende Zapfen innerhalb der basalen Kavität angeordnet ist;
E) Nachfolgendes Eindrücken des zumindest einen Zahnformkörpers in die zumindest eine Aufnahme und Austreten von überschüssigem Klebstoff durch die seitliche Öffnung im Mantel des zumindest einen Zahnformkörpers, wobei die seitliche Öffnung im Mantel des zumindest einen Zahnformkörpers zumindest bereichsweise in koronaler Richtung über einen angrenzenden Marginalsaum der Prothesenbasis vorsteht; und
F) Nachfolgendes Aushärten des Klebstoffs zur endgültigen Verbindung des zumindest einen Zahnformkörpers mit der Prothesenbasis.

Dentalprothesen und damit dentale Teilprothesen und Vollprothesen sind zum Ersatz von vollständig verlorengegangenen Zähnen vorgesehen. Sie weisen zumindest einen Zahnformkörper und eine Prothesenbasis auf. Die Prothesenbasis ist ein Zahnfleischimitat. Eine Prothesenbasis kann auf einem zahnlosen Kiefer aufgelegt beziehungsweise dort befestigt werden. Der Zahnformkörper oder die Zahnformkörper dienen der Nachbildung verlorengegangener Zähne und sollen vor allem auch die Kaufunktion des Kiefers aber auch den ästhetischen Eindruck wiederherstellen.

Ein Zahnformkörper weist eine koronale Oberfläche und eine gegenüberliegende basale Seite auf. Die basale Seite ist der koronalen Oberfläche gegenüberliegend angeordnet. Die koronale Oberfläche umfasst die Beißfläche (Okklusionsfläche) des Zahnformkörpers und die umliegenden angrenzenden seitlichen Bereiche und soll vorzugsweise nicht oder möglichst wenig bearbeitet werden. Die basale Seite dient der Verankerung des Zahnformkörpers in der Prothesenbasis und kann auch als zervikaler Bereich bezeichnet werden. Hierzu kann die basale Seite eines Zahnformkörpers in einer Aufnahme in Form zumindest eines passenden Zahnfachs in der Prothesenbasis eingesetzt und mit dieser verbunden werden.

Der Mantel eines Zahnformkörpers ist die Oberfläche des Zahnformkörpers, die zwischen der koronalen Oberfläche und der basalen Seite angeordnet ist. Der Begriff "Mantel" ist dabei an die grob zylinderförmige Gestalt und Symmetrie des Zahnformkörpers beziehungsweise eines Prothesenzahns angelehnt, wobei die Zylinderachse von der basalen Seite zur koronalen Seite des Zahnformkörpers durch dessen Schwerpunkt verläuft. Der Mantel des Zahnformkörpers verbindet also die koronale Oberfläche und die basale Oberfläche des Zahnformkörpers. Man könnte auch sagen, dass der Mantel all diejenigen Oberflächen des Zahnformkörpers umfasst, die nicht die koronale Oberfläche und nicht die basale Oberfläche sind. Der Mantel umschließt den Zahnformkörper.

Der zumindest eine Zahnformkörper kann vorzugsweise ein industriell vorgefertigter vorkonfektionierter Zahnformkörper sein. Der zumindest eine Zahnformkörper kann in Form von einem einzelnen Prothesenzahn oder in Form von mehreren einzelnen Prothesenzähnen vorliegen, als auch in Form zumindest einer zusammenhängenden oder einteiligen Baugruppe von mehreren miteinander verbundenen Prothesenzähnen vorliegen, bevorzugt in Form zumindest einer zusammenhängenden oder einteiligen Baugruppe aus zwei bis vier Prothesenzähnen vorliegen.

Unter dem Marginalsaum (bei natürlichem Gebiss auch als Zahnfleischsaum bezeichnet) versteht der Fachmann (und soll vorliegend verstanden werden) die Grenzlinie an der Oberfläche der Dentalprothese, an der der zumindest eine Zahnformkörper im eingesetzten Zustand an die Prothesenbasis grenzt. Anders ausgedrückt ist dies der Übergang vom Zahnfleischimitat zu dem zumindest einen Zahnformkörper an der Oberfläche der Dentalprothese.

Bei erfindungsgemäßen Verfahren kann vorgesehen sein, dass in Schritt B) bei der Herstellung oder basalen Bearbeitung des zumindest einen Zahnformkörpers und in Schritt A) bei der Herstellung der Prothesenbasis ein Erzeugen oder Bereitstellen eines virtuellen 3D-Modells einer Dentalprothese mit einem virtuellen Modell der Prothesenbasis als Zahnfleischimitat und mit zumindest einem virtuellen Modell von dem zumindest einem in der Prothesenbasis anzuordnenden Zahnformkörper zur Nachbildung zumindest eines Zahns erfolgt.

Dadurch kann das Verfahren unter Anwendung von modernen CAD/CAM-Verfahren besonders einfach und kostengünstig umgesetzt werden. Zudem ergibt sich so eine Automatisierung und eine bessere Reproduzierbarkeit des Verfahrens.

Dabei kann vorgesehen sein, dass die seitliche Öffnung im Mantel des zumindest einen Zahnformkörpers in dem virtuellen Modell oder in den virtuellen Modellen im Rahmen des Verfahrens rechnerisch ergänzt wird, wobei bevorzugt die seitliche Öffnung im Mantel des zumindest einen Zahnformkörpers derart ergänzt wird, dass die seitliche Öffnung im Mantel des zumindest einen Zahnformkörpers in koronaler Richtung über den Marginalsaum der Prothesenbasis hinausragt, wenn der zumindest eine Zahnformkörper vollständig in die ihm zugeordnete Aufnahme eingesetzt ist, wobei besonders bevorzugt die seitliche Öffnung im Mantel des zumindest einen Zahnformkörpers in koronaler Richtung zumindest 0,1 mm über den Marginalsaum der Prothesenbasis hinausragt, ganz besonders bevorzugt die seitliche Öffnung im Mantel des zumindest einen Zahnformkörpers in koronaler Richtung zumindest 0,3 mm über den Marginalsaum der Prothesenbasis hinausragt.

Hierdurch kann erreicht werden, dass die seitliche Öffnung im Mantel des zumindest einen Zahnformkörpers zum Austreten des Klebstoffs automatisch und an der gewünschten Position und mit dem gewünschten Effekt angeordnet wird. Die Herstellung oder Bearbeitung des zumindest einen Zahnformkörpers kann dann vollständig automatisiert erfolgen.

Ferner kann vorgesehen sein, dass in Schritt E) der zumindest eine Zahnformkörper bis zu einem Anschlag in die zumindest eine Aufnahme eingedrückt wird, wobei vorzugsweise der Anschlag durch ein koronales Ende des Zapfens und durch einen Gegenanschlag am koronalen Boden in der basalen Kavität gebildet wird.

Es kann dabei vorgesehen sein, dass das Ende des Zapfens eine Deckfläche ist und der Gegenanschlag eine zur Auflagefläche passende koronale Grundfläche der basalen Kavität ist.

Durch diese Maßnahme wird eine korrekte Positionierung und eine sehr genaue Einstellung der Okklusion (Bisshöhe) des zumindest einen Zahnformkörpers in der Prothesenbasis erreicht. Hierdurch kann eine aufwendige Nachbearbeitung der Dentalprothese zur Einstellung der Okklusion reduziert oder vermieden werden.

Des Weiteren kann vorgesehen sein, dass beim Eindrücken des zumindest einen Zahnformkörpers in die zumindest eine Aufnahme in Schritt E) der Zapfen in der basalen Kavität geführt wird und der zumindest eine Zahnformkörper dadurch relativ zur Prothesenbasis ausgerichtet und positioniert wird.

Hierzu kann der Zapfen in koronaler Richtung zumindest bereichsweise konisch verjüngend geformt sein und/oder es kann die basale Kavität sich in koronaler Richtung zumindest bereichsweise konisch verjüngend geformt sein.

Dadurch wird erreicht, dass der zumindest eine Zahnformkörper bequem in die zumindest eine Aufnahme der Prothesenbasis gesteckt werden kann und sich dabei selbst ausrichtet und zentriert. Hiermit wird also das Einsetzen des zumindest einen Zahnformkörpers in die Prothesenbasis vereinfacht.

Es kann vorgesehen sein, dass die Prothesenbasis mit mehreren Aufnahmen für einen Zahnformkörper oder für mehrere Zahnformkörper hergestellt wird oder die breitgestellte Prothesenbasis mehrere Aufnahmen für einen Zahnformkörper oder für mehrere Zahnformkörper aufweist, wobei die Zapfen der Aufnahmen und die basalen Kavitäten der Zahnformkörper eine jeweils paarweise zueinander passende Indexierung aufweisen, so dass jeder der Zahnformkörper zu genau einer Aufnahme passt und in einer Position und Orientierung in dieser Aufnahme befestigt werden kann.

Dadurch kann ein Vertauschen der Positionen von Zahnformkörpern verhindert werden.

Auch kann vorgesehen sein, dass der Zapfen der zumindest einen Aufnahme und die basale Kavität des zumindest einen Zahnformkörpers mit abgerundeten Strukturen mit einem Krümmungsradius von zumindest 0,3 mm hergestellt wird oder abgerundete Strukturen mit einem Krümmungsradius von zumindest 0,3 mm aufweist, bevorzugt mit einem Krümmungsradius von zumindest 0,5 mm hergestellt wird oder einen Krümmungsradius von zumindest 0,5 mm aufweist.

Hierdurch wird sichergestellt, dass die Bearbeitung und Herstellung der Zahnformkörper mit subtraktiven CAM-Verfahren erfolgen kann. Insbesondere wird so eine Bearbeitung mit CAM-Fräsen ermöglicht.

Gemäß einer bevorzugten Weiterbildung kann vorgesehen sein, dass eine Deckfläche des Zapfens der zumindest einen Aufnahme und eine koronale Grundfläche in der basalen Kavität des zumindest einen Zahnformkörpers ein nicht rotationssymmetrisches Profil aufweisen oder mit einem nicht rotationssymmetrischen Profil hergestellt werden, oder eine Deckfläche des Zapfens der zumindest einen Aufnahme und eine koronale Grundfläche in der basalen Kavität des zumindest einen Zahnformkörpers ein Omega-Profil aufweisen oder mit einem Omega-Profil hergestellt werden.

Unter einem Omega-Profil wird im Rahmen der vorliegenden Erfindung ein ebener Flächenkörper verstanden, bei dem eine runde, ovale, elliptische oder kreisrunde Fläche auf einer Seite mit einer rechteckigen Fläche verbunden ist, so dass eine Seite des Rechtecks vollständig innerhalb der runden, ovalen, elliptischen oder kreisrunden Fläche liegt, wobei vorzugsweise alle Ecken des Omega-Profils abgerundet sind. Ein Omega-Profil kann dadurch Pilz-förmig erscheinen. Bevorzugt ist eine ovale oder kreisrunde Fläche mit einem Rechteck zur Bildung der Omega-Form verbunden.

Durch die Verwendung eines nicht rotationssymmetrischen Profils kann verhindert werden, dass der zumindest eine Zahnformkörper mit einer ungewollten und falschen Orientierung in die zumindest eine Aufnahme gesteckt wird. Dadurch wird die Durchführung des Verfahrens vereinfacht.

Eine Omega-Form ist nicht rotationssymmetrisch und kann besonders einfach hergestellt werden. Zudem kann eine Omega-Form besonders stabil ausgeführt werden, weil der darunter liegende Zapfen keine Schwachstellen oder Sollbruchstellen aufweist.

Das Omega Profil in seinen unterschiedlichen möglichen Ausführungsvarianten bewirkt einen Rotationsschutz, sowie einen Schutz gegen Verschieben des Zahnformkörpers gegen die Aufnahme.

Es kann dabei vorgesehen sein, dass der Zapfen im Querschnitt parallel zu der Deckfläche die gleiche Profilform aufweist, wie die Deckfläche, wobei bevorzugt die Abmessungen des Querschnitts dabei größer sind als die Abmessungen der Deckfläche.

Hierdurch kann der Zapfen besonders stabil ausgeführt werden.

Es kann auch vorgesehen sein, dass die seitliche Öffnung im Mantel des zumindest einen Zahnformkörpers approximal oder oral angeordnet ist, bevorzugt oral angeordnet ist.

Hierdurch kann der durch die seitliche Öffnung im Mantel des zumindest einen Zahnformkörpers austretende Klebstoff entfernt werden, ohne dass die Dentalprothese im labialen Bereich ästhetisch beeinträchtigt wird. Die orale Seite lässt sich besonders leicht nachbearbeiten und es besteht nicht die Gefahr, dass zwei benachbarte Zahnformkörper miteinander verkleben.

Bevorzugt kann des Weiteren vorgesehen sein, dass nach Schritt E) oder vor Schritt F) und nach Schritt E) der aus der seitlichen Öffnung im Mantel des zumindest einen Zahnformkörpers ausgetretene Klebstoff entfernt wird.

Hierdurch wird der Tragekomfort erhöht. Dabei ergibt sich ein besonderer kombinatorischer Effekt dadurch, dass der Klebstoff vollständig oder vor allem durch die seitliche Öffnung im Mantel des zumindest einen Zahnformkörpers austritt und demzufolge nur oder nur in großen Mengen an dieser einen Stelle entfernt werden muss, wodurch die Nachbearbeitung durch Entfernen des Klebstoffs wesentlich vereinfacht wird.

Ferner kann vorgesehen sein, dass die seitliche Öffnung im Mantel des zumindest einen Zahnformkörpers einen Querschnitt von zumindest 0,1 mm aufweist, bevorzugt einen Querschnitt von zumindest 0,3 mm aufweist, besonders bevorzugt einen Querschnitt von zumindest 0,5 mm aufweist, und/oder die seitliche Öffnung im Mantel des zumindest einen Zahnformkörpers einen Querschnitt von maximal 10 mm aufweist, bevorzugt einen Querschnitt von maximal 4 mm aufweist, besonders bevorzugt einen Querschnitt von maximal 2 mm aufweist.

Der Querschnitt der seitlichen Öffnung im Mantel des zumindest einen Zahnformkörpers ist insbesondere der freie Leitungsquerschnitt, der sich von der seitlichen Mantelfläche des zumindest einen Zahnformkörpers bis in die basale Kavität des zumindest einen Zahnformkörpers erstreckt.

Durch die Untergrenzen wird erreicht, dass der Klebstoff ohne weiteres durch die seitliche Öffnung im Mantel austreten kann und dass die Fertigung der seitlichen Öffnung im Mantel mit herkömmlichen CAM-Verfahren kostengünstig herstellbar ist.

Durch die Obergrenzen wird erreicht, dass die äußere Form des Zahnformkörpers im Bereich des Marginalsaums der Prothesenbasis nicht zu stark von der Idealform abweicht und dadurch möglichst geringe linguale Irritationen ausgelöst werden.

Gemäß einer bevorzugten Weiterbildung der vorliegenden Erfindung weist die seitliche Öffnung im Mantel des zumindest einen Zahnformkörpers einen Querschnitt von 0,1 mm bis 10 mm auf, besonders bevorzugt von 0,3 mm bis 4 mm auf, ganz besonders bevorzugt von 0,5 mm bis 2 mm auf.

Diese Maße sind für eine einfache Herstellung der seitlichen Öffnung im Mantel des zumindest einen Zahnformkörpers geeignet und gleichzeitig zum Ableiten des Klebstoffs geeignet.

Die der vorliegenden Erfindung zugrundeliegenden Aufgaben werden auch gelöst durch eine Vorrichtung zum Umsetzen eines erfindungsgemäßen Verfahrens, die Vorrichtung aufweisend ein erstes Berechnungsmodul zur Berechnung eines 3D-CAD-Modells einer Prothesenbasis mit zumindest einer Aufnahme zur Befestigung zumindest eines Zahnformkörpers, wobei in jeder der zumindest einen Aufnahme vorstehende Zapfen angeordnet sind,
ein zweites Berechnungsmodul zur Berechnung zumindest eines virtuellen 3D-CAD-Modells des zumindest einen Zahnformkörpers mit einer basalen Kavität zur Aufnahme der Zapfen, wobei das zweite Berechnungsmodul eine Berechnung von virtuellen 3D-Daten einer seitlichen Öffnung im Mantel des zumindest einen virtuellen 3D-CAD-Modells des zumindest einen Zahnformkörpers durchführt, so dass bei vollständig in die Prothesenbasis eingesetztem Zahnformkörper die seitliche Öffnung im Mantel des zumindest einen Zahnformkörpers zumindest bereichsweise in koronaler Richtung über einen angrenzenden Marginalsaum der Prothesenbasis vorsteht und die basale Kavität mit der seitlichen Öffnung im Mantel des zumindest einen Zahnformkörpers verbunden ist, und
eine Prothesenbasis-CAM-Vorrichtung zur Herstellung der Prothesenbasis nach Maßgabe des ersten Berechnungsmoduls und/oder eine Zahnformkörper-CAM-Vorrichtung zur Herstellung oder Bearbeitung des zumindest einen Zahnformkörpers nach Maßgabe des zweiten Berechnungsmoduls.

Die Prothesenbasis-CAM-Vorrichtung zur Herstellung der Prothesenbasis kann eine computergesteuerte 5-Achsfräse sein oder eine 3D-Drucker. Die Zahnformkörper-CAM-Vorrichtung zur Herstellung oder Bearbeitung des zumindest einen Zahnformkörpers kann eine computergesteuerte 5-Achsfräse sein.

Das erste Berechnungsmodul kann auch derart ausgestaltet sein, dass mit dem zweiten Berechnungsmodul ein Marginalsaum des 3D-CAD-Modells der Prothesenbasis in Abhängigkeit von der Lage der seitlichen Öffnung im Mantel des zumindest einen Zahnformkörpers in der Prothesenbasis derart konstruierbar oder verschiebbar ist, dass die seitliche Öffnung im Mantel des zumindest einen Zahnformkörpers in koronaler Richtung über den Marginalsaum vorsteht, bevorzugt zumindest 0,1 mm, besonders bevorzugt zumindest 0,3 mm vorsteht. Hierdurch kann sichergestellt werden, dass die seitliche Öffnung im Mantel des zumindest einen Zahnformkörpers freiliegt, so dass überschüssiger Klebstoff durch die seitliche Öffnung austreten kann.

Dabei kann vorgesehen sein, dass mit dem ersten Berechnungsmodul eine Berechnung einer Deckfläche am koronalen Ende des Zapfens durchführbar ist und mit dem zweiten Berechnungsmodul eine Berechnung einer zu der Deckfläche passenden koronalen Grundfläche in der basalen Kavität des zumindest einen Zahnformkörpers durchführbar ist.

Hierdurch kann mit dem ersten Berechnungsmodul und mit dem zweiten Berechnungsmodul die Okklusion, das heißt die Bisshöhe des zumindest einen Zahnformkörpers in der Prothesenbasis dadurch genau eingestellt werden, dass die Auflagefläche am koronalen Ende des Zapfens im virtuellen Modell an der koronalen Grundfläche in der basalen Kavität flächenbündig anliegt und dies der gewünschten finalen Position des zumindest einen Zahnformkörpers in der Prothesenbasis entspricht und dadurch die Okklusion genau festgelegt ist.

Die der vorliegenden Erfindung zugrundeliegenden Aufgaben werden des Weiteren gelöst durch einen Zahnformkörper und eine Prothesenbasis zur Herstellung einer Dentalprothese, bei dem der Zahnformkörper eine basale Kavität und eine seitliche Öffnung im Mantel des Zahnformkörpers aufweist, wobei die seitliche Öffnung mit der basalen Kavität verbunden ist, wobei in der basalen Kavität eine koronale Grundfläche zum Positionieren des Zahnformkörpers auf einem Zapfen angeordnet ist, wobei die koronale Grundfläche eine Indexierung oder ein nicht rotationssymmetrisches Profil aufweist, und wobei die seitliche Öffnung im Mantel des Zahnformkörpers derart weit in koronaler Richtung reicht, dass sie in einem in der Prothesenbasis vollständig eingesetzten Zustand zumindest bereichsweise in koronaler Richtung über einen angrenzenden Marginalsaum der Prothesenbasis vorsteht.

Dabei kann vorgesehen sein, dass die seitliche Öffnung im Mantel des zumindest einen Zahnformkörpers einen Querschnitt von zumindest 0,1 mm aufweist, bevorzugt einen Querschnitt von zumindest 0,3 mm aufweist, besonders bevorzugt einen Querschnitt von zumindest 0,5 mm aufweist.

Der Querschnitt der seitlichen Öffnung im Mantel des Zahnformkörpers ist insbesondere der freie Leitungsquerschnitt, der sich von der seitlichen Mantelfläche des Zahnformkörpers bis in die basale Kavität des Zahnformkörpers erstreckt.

Durch die Untergrenzen wird erreicht, dass der Klebstoff ohne weiteres durch die seitliche Öffnung im Mantel austreten kann und dass die Fertigung der seitlichen Öffnung im Mantel mit herkömmlichen CAM-Verfahren kostengünstig herstellbar ist.

Auch kann vorgesehen sein, dass die seitliche Öffnung im Mantel des zumindest einen Zahnformkörpers einen Querschnitt von maximal 10 mm aufweist, bevorzugt einen Querschnitt von maximal 4 mm aufweist, besonders bevorzugt einen Querschnitt von maximal 2 mm aufweist.

Durch die Obergrenzen wird erreicht, dass die äußere Form des Zahnformkörpers im Bereich des Marginalsaums der Prothesenbasis nicht zu stark von der Idealform abweicht und dadurch möglichst geringe linguale Irritationen ausgelöst werden.

Gemäß einer bevorzugten Weiterbildung der vorliegenden Erfindung weist die seitliche Öffnung im Mantel des zumindest einen Zahnformkörpers einen Querschnitt von 0,1 mm bis 10 mm auf, besonders bevorzugt von 0,3 mm bis 4 mm auf, ganz besonders bevorzugt von 0,5 mm bis 2 mm auf.

Diese Maße sind für eine einfache Herstellung der seitlichen Öffnung im Mantel des Zahnformkörpers geeignet und gleichzeitig zum Ableiten des Klebstoffs geeignet.

Es ist vorgesehen, dass in der basalen Kavität eine koronale Grundfläche zum Positionieren des Zahnformkörpers auf einem Zapfen angeordnet ist, wobei die koronale Grundfläche eine Indexierung oder ein nicht rotationssymmetrisches Profil aufweist, besonders bevorzugt eine Omega-Form aufweist.

Hierdurch kann der Zahnformkörper besonders einfach an einer passenden Prothesenbasis mit passendem Zapfen angelegt und befestigt werden.

Es ist bei erfindungsgemäßen Zahnformkörpern vorgesehen, dass die seitliche Öffnung im Mantel des Zahnformkörpers derart weit in koronaler Richtung reicht, dass sie in einem in der Prothesenbasis vollständig eingesetzten Zustand zumindest bereichsweise in koronaler Richtung über einen angrenzenden Marginalsaum der Prothesenbasis vorsteht.

Hierdurch wird erreicht, dass der Klebstoff zum Verbinden des Zahnformkörpers mit der Prothesenbasis oberhalb des Marginalsaums durch die seitliche Öffnung im Mantel des Zahnformkörpers abgeleitet werden kann und dort auf einfache Weise entfernt werden kann.

Die der vorliegenden Erfindung zugrundeliegenden Aufgaben werden auch gelöst durch eine Dentalprothese hergestellt mit einem erfindungsgemäßen Verfahren.

Der Erfindung liegt die überraschende Erkenntnis zugrunde, dass es durch die basale Kavität im Zahnformkörper in Wechselwirkung mit dem Zapfen in der Aufnahmefläche der Prothesenbasis gelingt, eine einfache Zentrierung und Ausrichtung des Zahnformkörpers in der Aufnahmefläche der Prothesenbasis zu ermöglichen, wobei durch den Zapfen und die basale Kavität die Bisshöhe (Okklusion) des Zahns in der Prothesenbasis auch dann genau einstallbar ist, wenn am unteren basalen Rand des Zahnformkörpers Veränderungen vorgenommen werden, und gleichzeitig durch die seitliche Öffnung im Mantel des Zahnformkörpers einen freien und lokalisierten Überlauf für überschüssigen Klebstoff bereitzustellen, so dass der Klebstoff durch die seitliche Öffnung im Mantel des zumindest einen Zahnformkörpers ungehindert austreten kann und von dort problemlos entfernt werden kann, ohne dass dies negative Auswirkungen auf den Klebstoffspalt zwischen dem Zahnformkörper und der Prothesenbasis hat. Überschüssiger Klebstoff kann dadurch über die seitliche Öffnung im Mantel des zumindest einen Zahnformkörpers ablaufen. Wenn der Zapfen und die basale Kavität jeweils ein geeignetes Profil aufweisen, insbesondere wenn eine Deckfläche des Zapfens und eine koronale Grundfläche der basalen Kavität zueinander passende Profile aufweisen, wird hierdurch ein Verdrehschutz erreicht und gleichzeitig werden der Zahnformkörper und die Prothesenbasis in diesem Bereich auf Stoß miteinander verbunden, so dass die gewünschte Bisshöhe beziehungsweise die gewünschte Okklusion sich sehr genau einstellen lässt. Die sich durch die erfindungsgemäßen Maßnahmen ergebende äußerst niedrige Aufbauhöhe ermöglicht das Verwenden von bestehenden Zahnformkörpern mit basaler Kavität, neuentwickelten Zahnformkörperlinien, sowie gekürzten Zahnformkörpern mit integrierter Geometrie.

Ein weiterer Vorteil der vorliegenden Erfindung ist darin zu sehen, dass der Klebstoff zum Verbinden der Zahnformkörper mit der Prothesenbasis gezielt an einer Stelle zwischen der Prothesenbasis und den Zahnformkörpern abgeleitet wird, wodurch der überschüssige Klebstoff gezielt an dieser Stelle entfernt werden kann und dadurch auch die Gefahr reduziert wird, dass der austretende überschüssige Klebstoff die Zahnzwischenräume blockiert, mehrere Zahnformkörper miteinander verbindet und dabei die Zahnzwischenräume zwischen einzelnen Zahnformkörper verschließt. In dem Bereich der Zahnzwischenräume ist der Klebstoff nur sehr schwer zu entfernen.

Das konstruktive Einarbeiten eines geeigneten Profils in die Deckfläche des Zapfens und in die koronale Grundfläche der basalen Kavität (beispielsweise in Form eines Omega Profils), mit oralem Sichtfenster als die seitliche Öffnung in dem Mantel des künstlichen Zahnformkörpers erfüllt zusammen mit der passenden Prothesenbasis die Anforderungen, die vorliegend als Aufgabenstellung formuliert ist. Die seitlichen Flächen des Profils können sowohl konisch als auch parallel ausgeführt werden. Durch das orale Sichtfenster (die seitliche Öffnung im Mantel des zumindest einen Zahnformkörpers) ist ferner eine Kontrollfunktion durch Sichtprüfung für das Erreichen der Endlage gegeben. Die seitliche Öffnung im Mantel des zumindest einen Zahnformkörpers erhöht dadurch die Prozesssicherheit und erlaubt eine Prüfung einer guten Passung. Es kann also durch den Anwender eine Sichtkontrolle des gewünschten Sitzes des Zahnformkörpers in der Prothesenbasis erfolgen, wodurch mögliche Fehlsetzungen verhindert werden. Alle konstruktiven Maße sind dabei vorzugsweise so gewählt, dass sie für das dentale Fräsen mit Standardwerkzeugen und mit dem 3D Drucker umgesetzt werden können.

Die lagegenaue Verpassung des zumindest einen Zahnformkörpers erfolgt über teilweise ohne Klebespalt ausgeführte Flächen (zum Beispiel horizontale Flächen für die vertikale Verpassung, wie zum Beispiel die Deckfläche des Zapfens und die koronale Grundfläche der basalen Kavität). An diesen ohne Klebespalt ausgeführten Flächen wird eventuell aufgebrachter Klebstoff komplett wieder verpresst und so eine exakte Passung sichergestellt.

Das oral angebrachte Kontrollfenster verfügt optional bereits über eine leichte Vertiefung der Oberfläche, was nach dem Verklebungsprozess eine vollständige ästhetische Überdeckung mit zahnfarbenem Werkstoff ermöglicht.

Im Folgenden werden Ausführungsbeispiele der Erfindung anhand von sechs schematisch dargestellten Figuren und einem Flussdiagramm erläutert, ohne jedoch dabei die Erfindung zu beschränken. Dabei zeigt:
Figur 1: eine schematische perspektivische Ansicht eines Zahnformkörpers eingesetzt in eine Prothesenbasis zur Herstellung einer Dentalprothese;
Figur 2: eine schematische perspektivische Ansicht des Zahnformkörpers eingesetzt in die Prothesenbasis nach Figur 1 aus einer anderen Perspektive;
Figur 3: eine schematische perspektivische Ansicht der Prothesenbasis nach den Figuren 1 und 2;
Figur 4: eine schematische perspektivische basale Ansicht des Zahnformkörpers nach den Figuren 1 und 2;
Figur 5: eine schematische perspektivische Ansicht einer Dentalprothese für den Oberkiefer und einer Dentalprothese für den Unterkiefer;
Figur 6: eine schematische Skizze einer erfindungsgemäßen Vorrichtung zum Umsetzen eines erfindungsgemäßen Verfahrens; und
Figur 7: den Ablauf eines erfindungsgemäßen Verfahrens zur Herstellung einer Dentalprothese.

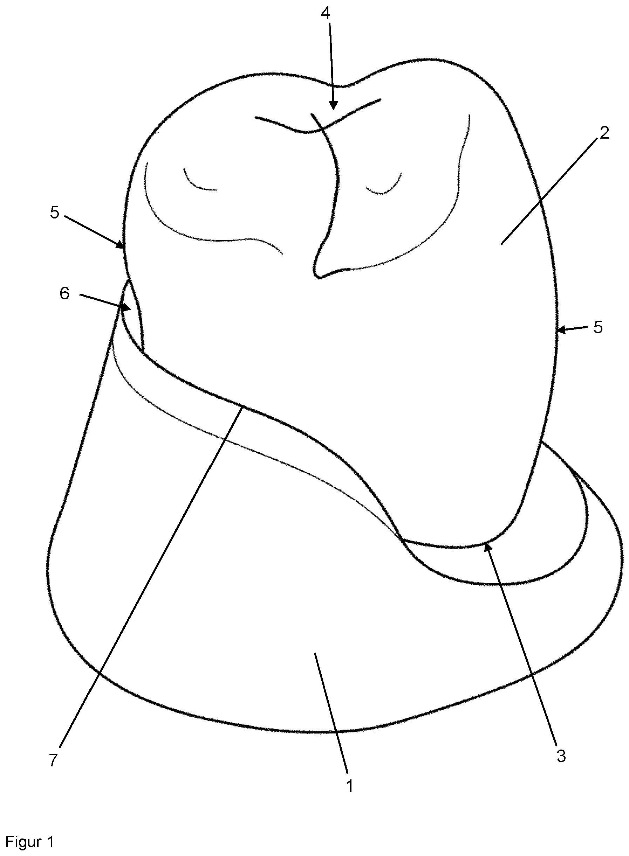

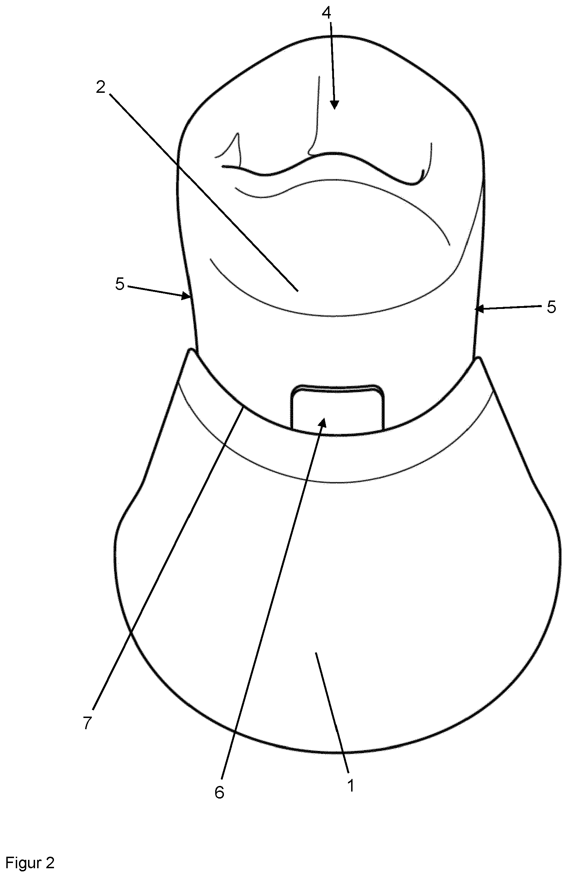

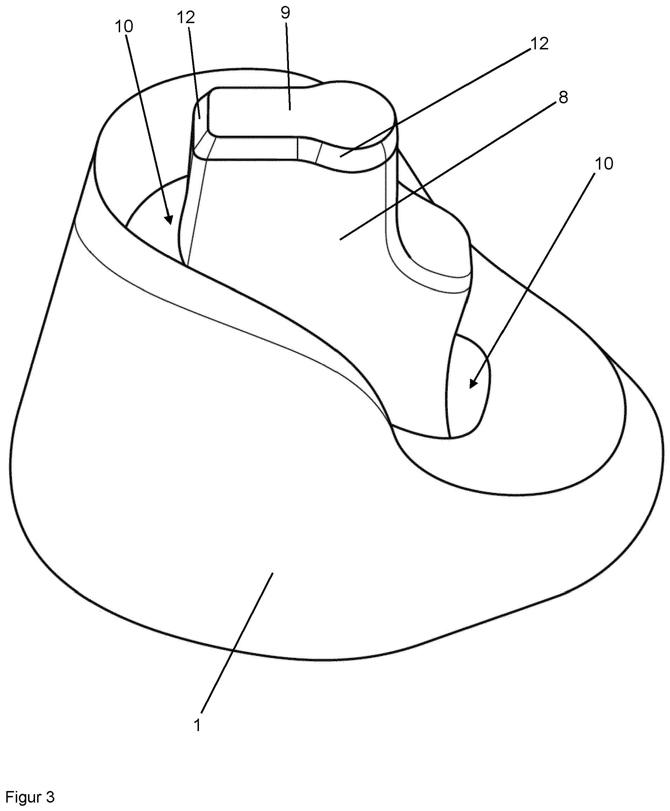

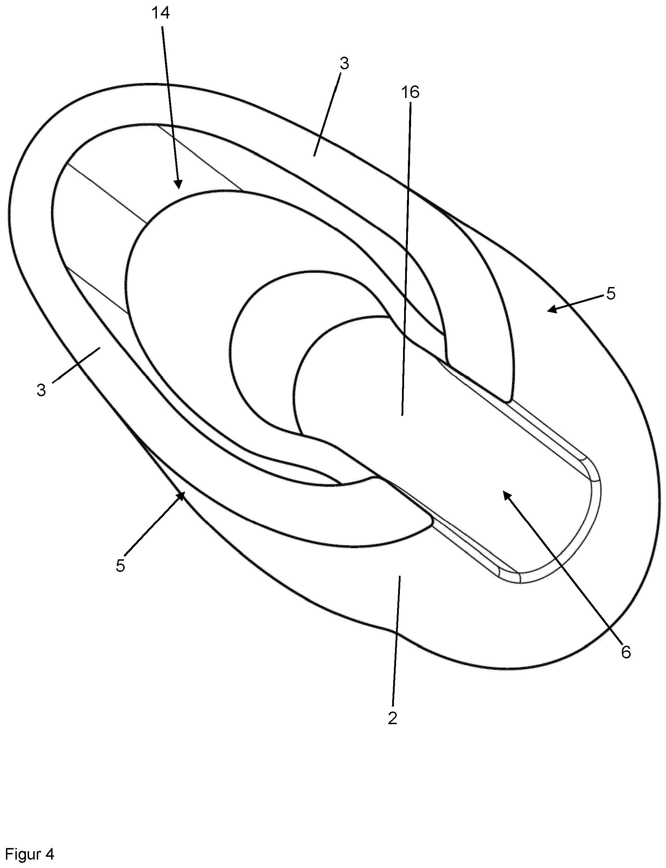

Die Figuren 1 und 2 zeigen zwei schematische perspektivische Ansichten einer Prothesenbasis 1, in die ein Zahnformkörper 2 eingesetzt ist, wobei die beiden Ansichten aus unterschiedlichen Richtungen erfolgen. Figur 3 zeigt die Prothesenbasis 1 und Figur 4 den Zahnformkörper 2 jeweils einzeln. Die Prothesenbasis 1 kann zur Auflage beziehungsweise zur Befestigung auf der Gingiva verwendet werden. Die Prothesenbasis 1 kann als Zahnfleischimitat ausgeführt sein. Die Prothesenbasis 1 kann aus einem rosafarben eingefärbten beziehungsweise zahnfleischfarbenen Kunststoff bestehen. Die Färbung und Transparenz kann passend zu einer Zahnfleischoptik gewählt werden. Der Zahnformkörper 2 besteht vorzugsweise aus einem zahnfarbenem Kunststoff oder aus einer zahnfarbenen Keramik. In dem Kunststoff können keramische oder anorganische Füllstoffe enthalten sein. Auf einer Seite der Prothesenbasis 1 kann eine Aufnahme 10 (in den Figuren 1 und 2 nicht zu sehen, aber in Figur 3 zu sehen) zur Fixierung des Zahnformkörpers 2 vorgesehen sein. Die Aufnahme 10 kann die Form einer Vertiefung in Richtung eines Kiefersattels als Auflage der Prothesenbasis 1 in der okklusalen Oberfläche der Prothesenbasis 1 haben.

Der Zahnformkörper 2 kann eine basale Seite 3, eine der basalen Seite 3 gegenüberliegende koronale Oberfläche 4 und einen Mantel 5 aufweisen. Der Mantel 5 ist die seitliche umlaufende Oberfläche des Zahnformkörpers 2, die die basale Seite 3 und die koronale Oberfläche 4 verbindet. Der Begriff "Mantel" ist dabei an die Zylinder-Geometrie des Zahnformkörpers 2 angelehnt, wobei die Zylinderachse des Zahnformkörpers 2 von dem Zentrum der basalen Seite 3 zur Mitte der koronalen Oberfläche 4 durch den Schwerpunkt des Zahnformkörpers 2 verläuft. Die basale Seite 3 kann auch als zervikale Seite bezeichnet werden und dient der Verbindung mit der Prothesenbasis 1. Die koronale Oberfläche 4 kann auch als Kaufläche bezeichnet werden.

Der Zahnformkörper 2 weist eine seitliche Öffnung 6 im Mantel 5 des Zahnformkörpers 2 auf.

Die seitliche Öffnung 6 im Mantel 5 des Zahnformkörpers 2 ist derart in dem Mantel 5 des Zahnformkörpers 2 angeordnet, dass die seitliche Öffnung 6 in koronaler Richtung über einen Marginalsaum 7 der Prothesenbasis 1 hinausragt, wenn der Zahnformkörper 2 vollständig in die Aufnahme 10 der Prothesenbasis 1 hineingedrückt ist. Die seitliche Öffnung 6 kann bei korrekter Positionierung in der Prothesenbasis 1 auf der oralen Seite angeordnet sein.

Die Aufnahme 10 bildet eine Vertiefung auf einer Oberseite der Prothesenbasis 1, so dass ein äußerer basaler Rand des Zahnformkörpers 2 in die Vertiefung eingesteckt werden muss, um den Zahnformkörper 2 mit der Aufnahme 10 zu verbinden. Aus der Aufnahme 10 der Prothesenbasis 1 erhebt sich ein Zapfen 8 (siehe Figur 3), auf den der Zahnformkörper 2 gesteckt werden kann. Der Zapfen 8 kann in einer Deckfläche 9 enden. Die Deckfläche 9 kann eine Omega-Form aufweisen. Im Bereich der Deckfläche 9 kann eine um die Deckfläche 9 umlaufende konische Übergangsfläche 12 angeordnet sein, um eine Führung des Zapfens 8 in einer basalen Kavität 14 des Zahnformkörpers 2 (siehe Figur 4) zu ermöglichen und damit das Einsetzen des Zahnformkörpers 2 in die Prothesenbasis 1 zu erleichtern.

Die seitliche Öffnung 6 im Mantel 5 des Zahnformkörpers 2 erstreckt sich bis in eine basale Kavität 14 des Zahnformkörpers 2. Die basale Kavität 14 ist dadurch von der seitlichen Öffnung 6 aus zugänglich. Die basale Kavität 14 kann eine koronale Grundfläche 16 aufweisen. Die koronale Grundfläche 16 kann flächenbündig zu der Deckfläche 9 des Zapfens 8 passen. Die koronale Grundfläche 16 kann hierzu eine Omega-Form aufweisen. Wenn die koronale Grundfläche 16 und die Deckfläche 9 aneinander anliegen, kann die gewünschte Position des Zahnformkörpers 2 in der Prothesenbasis 1 erreicht sein. Die gewünschte Position des Zahnformkörpers 2 in der Prothesenbasis 1 ist dann durch diese Kontaktfläche definiert.

Die Figuren 1 bis 4 zeigen ein Ausführungsbeispiel der Prothesenbasis 1, bei der nur ein einziger Zahnformkörper 2 eingesetzt wird. Dieses Ausführungsbeispiel kann jedoch ohne weiteres auf Prothesenbasen mit mehreren Aufnahmen für einen Zahnformkörper oder für mehrere Zahnformkörper übertragen werden. Derartige Varianten sind aus dem Stand der Technik bekannt. Das vorliegende Ausführungsbeispiel ist also für den Fachmann ohne weiteres auf andere Varianten mit mehreren Aufnahmen und mehreren Zahnformkörpern übertragbar. Bei einer Prothesenbasis mit mehreren Aufnahmen können die Aufnahmen und dort vorzugsweise die Zapfen in den Aufnahmen eine Indexierung aufweisen, so dass die Zahnformkörper mit passender basaler Seite beziehungsweise Oberfläche nur in einer bestimmten Orientierung in der Prothesenbasis einzusetzen sind und jeder Zahnformkörper nur genau zu einer Aufnahme passt.

Die Figuren 1 bis 4 können auch ein virtuelles Modell eines Zahnformkörpers 2 und einer Prothesenbasis 1 darstellen. Das virtuelle Modell des Zahnformkörpers 2 und der Prothesenbasis 1 kann aus einem virtuellen Modell einer Dentalprothese gewonnen werden, indem das virtuelle Modell der Dentalprothese durch File-Splitting in das virtuelle Modell der Prothesenbasis 1 und das virtuelle Modell des Zahnformkörpers 2 rechnerisch getrennt wird. Mehrere Zahnformkörper (nicht gezeigt) können als einzelne Prothesenzähne vereinzelt vorliegen, so wie dies für den einzelnen Zahnformkörper 2 in der Figur 4 dargestellt ist, oder sie können auch als zusammenhängende Gruppe von Prothesenzähnen (nicht gezeigt) aufgebaut sein.

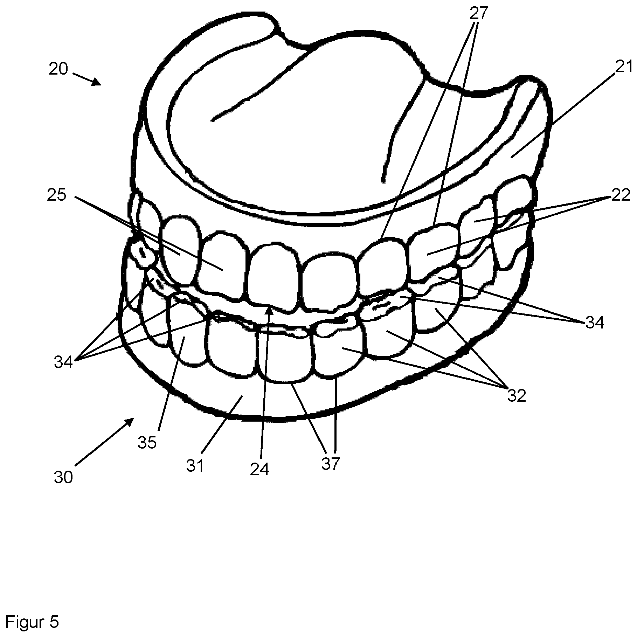

Figur 5 zeigt eine schematische Darstellung einer Dentalprothese 20 für einen Oberkiefer und einer Dentalprothese 30 für einen Unterkiefer in Okklusion. Die Dentalprothese 20 für den Oberkiefer und die Dentalprothese 30 für den Unterkiefer sind beide Vollprothesen. Die Dentalprothese 20 für den Oberkiefer weist eine Prothesenbasis 21 und einen vollen Satz von Zahnformkörpern 22 auf. Die Zahnformkörper 22 sind in Aufnahmen der Prothesenbasis 21 eingeklebt.

Die Zahnformkörper 22 der Dentalprothese 20 für den Oberkiefer können jeweils eine basale Seite, eine der basalen Seite gegenüberliegende koronale Oberfläche 24 und einen Mantel 25 aufweisen. Der Mantel 25 ist die seitliche umlaufende Oberfläche der Zahnformkörper 22, die die basale Seite und die koronale Oberfläche 24 verbindet. Die basale Seite ist analog der ersten Ausführung in den Figuren 1 und 2 in eine Aufnahme der Prothesenbasis 21 eingeklebt und daher in Figur 5 nicht erkennbar. Der Begriff "Mantel" ist dabei an die Zylinder-Geometrie des Zahnformkörpers 22 angelehnt, wobei die Zylinderachse des Zahnformkörpers 22 von dem Zentrum der basalen Seite zur Mitte der koronalen Oberfläche 24 durch den Schwerpunkt des Zahnformkörpers 22 verläuft. Die basale Seite kann auch als zervikale Seite bezeichnet werden und dient der Verbindung der Zahnformkörper 22 mit der Prothesenbasis 21. Die koronale Oberfläche 24 kann auch als Kaufläche bezeichnet werden.

Die Zahnformkörper 32 der Dentalprothese 30 für den Unterkiefer können jeweils eine basale Seite, eine der basalen Seite gegenüberliegende koronale Oberfläche 34 und einen Mantel 35 aufweisen. Der Mantel 35 ist die seitliche umlaufende Oberfläche der Zahnformkörper 32, die die basale Seite und die koronale Oberfläche 34 verbindet. Die basale Seite ist analog der ersten Ausführung in den Figuren 1 und 2 in eine Aufnahme der Prothesenbasis 31 eingeklebt und daher in Figur 5 nicht erkennbar. Der Begriff "Mantel" ist dabei an die Zylinder-Geometrie des Zahnformkörpers 32 angelehnt, wobei die Zylinderachse des Zahnformkörpers 32 von dem Zentrum der basalen Seite zur Mitte der koronalen Oberfläche 34 durch den Schwerpunkt des Zahnformkörpers 32 verläuft. Die basale Seite kann auch als zervikale Seite bezeichnet werden und dient der Verbindung der Zahnformkörper 32 mit der Prothesenbasis 31. Die koronale Oberfläche 34 kann auch als Kaufläche bezeichnet werden.

Die Zahnformkörper 22, 32 können einen Aufbau analog des Zahnformkörpers 2 nach den Figuren 1, 2 und 4 aufweisen. Jeder der Zahnformkörper 22, 32 weist somit eine seitliche Öffnung (in Figur 5 nicht zu sehen) im Mantel 25, 35 auf der oralen Seite des Zahnformkörpers 22, 32 auf. Die seitliche Öffnung im Mantel 25, 35 des Zahnformkörpers 22, 32 kann derart in dem Mantel 25, 35 des Zahnformkörpers 22, 32 angeordnet sein, dass die seitliche Öffnung in koronaler Richtung über einen Marginalsaum 27, 37 der Prothesenbasis 21, 31, in den der jeweilige Zahnformkörper 22, 32 eingesetzt ist, hinausragt, wenn der Zahnformkörper 22, 32 vollständig in die zugehörige Aufnahme der Prothesenbasis 21, 31 hineingedrückt ist.

Die Aufnahmen der Prothesenbasen 21, 31 können analog dem ersten Ausführungsbeispiel eine Vertiefung auf einer Oberseite der Prothesenbasis 21, 31 bilden, so dass ein äußerer basaler Rand der Zahnformkörper 22, 32 in die passende Vertiefung eingesteckt werden muss, um den Zahnformkörper 22, 32 mit der Aufnahme zu verbinden. Aus jeder der Aufnahmen der Prothesenbasis 21, 31 kann sich ein Zapfen erheben (in Figur 5 nicht zu sehen aber analog Figur 3), auf den der jeweils passende Zahnformkörper 22, 32 gesteckt werden kann. Der Zapfen kann in einer Deckfläche enden. Die Deckfläche kann eine Omega-Form aufweisen.

Die seitlichen Öffnungen im Mantel 25, 35 der Zahnformkörper 22, 32 erstrecken sich bis in eine basale Kavität (in Figur 5 nicht zu sehen). Die basale Kavität ist dadurch von der seitlichen Öffnung aus zugänglich. Die basale Kavität kann eine koronale Grundfläche aufweisen. Die koronale Grundfläche kann zu der Deckfläche des Zapfens passen. Die koronale Grundfläche kann hierzu eine Omega-Form aufweisen. Wenn die koronale Grundfläche und die Deckfläche aneinander anliegen, kann die gewünschte Position des Zahnformkörpers 22, 32 in der Prothesenbasis 21, 31 erreicht sein. Die gewünschte Position des Zahnformkörpers 22, 32 in der Prothesenbasis 21, 31 ist dann durch diese Kontaktfläche definiert.

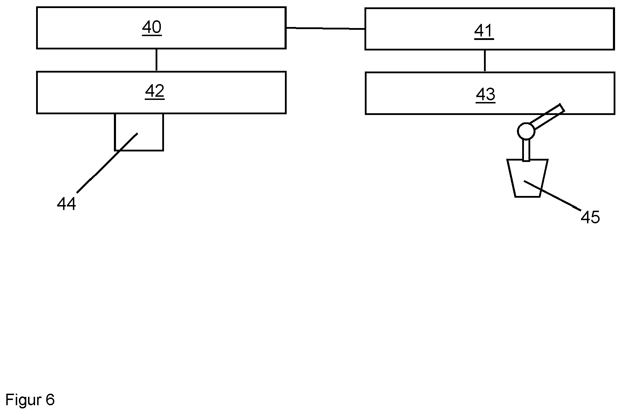

Die Figur 6 zeigt eine schematische Darstellung einer beispielhaften erfindungsgemäßen Vorrichtung zur Umsetzung eines erfindungsgemäßen Verfahrens zur Herstellung einer Dentalprothese.

Die Vorrichtung kann ein erstes Berechnungsmodul 40 aufweisen, mit dem ein 3D-CAD-Modell einer Prothesenbasis als virtuelles Modell berechnet wird. Ferner kann die Vorrichtung ein zweites Berechnungsmodul 41 aufweisen, mit dem ein 3D-CAD-Modell zumindest eines Zahnformkörpers als virtuelles Modell berechnet wird. Das erste Berechnungsmodul 40 und das zweite Berechnungsmodul 41 sind dabei miteinander zum Austausch von Daten verbunden, um das 3D-CAD-Modell des zumindest einen Zahnformkörpers auf das 3D-CAD-Modell der Prothesenbasis abzustimmen und beide aneinander anpassen zu können. Das zweite Berechnungsmodul 41 kann derart programmiert beziehungsweise derart ausgestaltet sein, dass eine Berechnung von virtuellen 3D-Daten einer seitlichen Öffnung im Mantel des virtuellen 3D-CAD-Modells des zumindest einen Zahnformkörpers durchgeführt wird, so dass bei vollständig in die Prothesenbasis eingesetztem Zahnformkörper die seitliche Öffnung im Mantel des zumindest einen Zahnformkörpers zumindest bereichsweise in koronaler Richtung über einen angrenzenden Marginalsaum der Prothesenbasis vorsteht und eine basale Kavität mit der seitlichen Öffnung im Mantel des zumindest einen Zahnformkörpers verbunden ist, wobei die Daten zu der Prothesenbasis hierzu von dem ersten Berechnungsmodul 40 über die Datenverbindung bereitgestellt werden. Das zweite Berechnungsmodul 41 kann auch dazu programmiert beziehungsweise ausgestaltet sein, um die Anordnung der basalen Kavität in Zahnformkörpern zu berechnen, beziehungsweise die basale Kavität in das virtuelle Modell des Zahnformkörpers einzufügen.

Das erste Berechnungsmodul 40 kann mit einer Prothesenbasis-CAM-Vorrichtung 42 zur Herstellung einer Prothesenbasis auf Basis des mit dem ersten Berechnungsmodul 40 berechneten virtuellen Modells der Prothesenbasis verbunden sein. In gleicher Weise kann das zweite Berechnungsmodul 41 mit einer Zahnformkörper-CAM-Vorrichtung 43 zur Herstellung oder basalen Bearbeitung von Zahnformkörpern verbunden sein. Die Prothesenbasis-CAM-Vorrichtung 42 zur Herstellung der Prothesenbasis kann eine computergesteuerte 5-Achsfräse sein oder eine 3D-Drucker. Hierzu kann die Prothesenbasis-CAM-Vorrichtung 42 kann hierzu einen Druckkopf 44 zum Drucken der Prothesenbasis aus einem zahnfleischfarbenen Kunststoff aufweisen. Die Zahnformkörper-CAM-Vorrichtung 43 zur Herstellung oder Bearbeitung des zumindest einen Zahnformkörpers kann eine computergesteuerte 5-Achsfräse sein und einen Fräskopf 45 an einem entsprechend beweglichen schwenkbaren Arm aufweisen.

Mit dem ersten Berechnungsmodul 40 kann eine Berechnung einer Auflagefläche am koronalen Ende eines Zapfens in einer Aufnahme der Prothesenbasis durchführbar sein und mit dem zweiten Berechnungsmodul 41 kann eine Berechnung einer zu der Auflagefläche passenden koronalen Grundfläche in der basalen Kavität des zumindest einen Zahnformkörpers durchführbar sein.

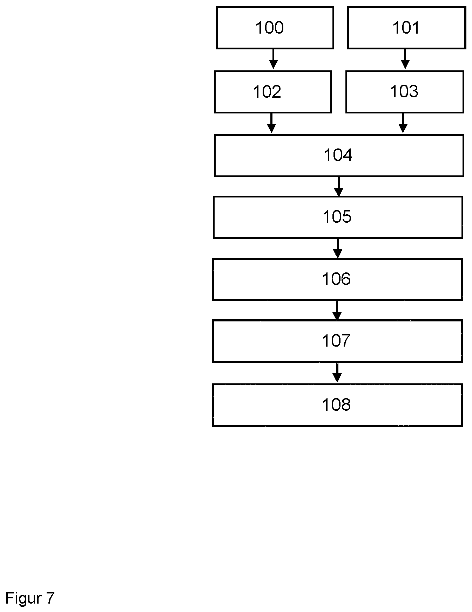

Im Folgenden wird ein beispielhaftes Verfahren anhand der mit Figur 1 bis 4 beschriebenen Dentalprothese erläutert. Der Ablauf des beispielhaften Verfahrens ist in dem Diagramm nach Figur 7 dargestellt. Die Beschreibung ist aber ohne weiteres auch auf andere Ausführungsbeispiele übertragbar.

In einem ersten Arbeitsschritt 100 kann eine Berechnung einer Prothesenbasis 1 als virtuelles CAD-Modell erfolgen. Das virtuelle CAD-Modell der Prothesenbasis 1 kann beispielsweise aus CAD-Daten einer Dentalprothese berechnet werden, und mittels File-Splitting ein CAD-Modell der Zahnformkörper 2 und ein CAD-Modell der Prothesenbasis 1 erzeugt werden. Die Prothesenbasis 1 wird dabei mit Aufnahme(n) 10 für den zumindest einen Zahnformkörper 2 berechnet, wobei in der zumindest einen Aufnahme 10 ein vorstehender Zapfen 8 berechnet wird.

Parallel dazu können in einem zweiten Arbeitsschritt 101 virtuelle CAD-Modelle von zumindest einem Zahnformkörper 2 berechnet werden, die zu der Prothesenbasis 1 nach Arbeitsschritt 100 passen. Dabei kann eine basale Kavität 14 und die seitliche Öffnung 6 im Mantel 5 des Zahnformkörpers 2 in das virtuelle CAD-Modell des Zahnformkörpers 2 eingerechnet werden. Die Anordnung der seitlichen Öffnung 6 im Mantel 5 kann dabei derart erfolgen, dass die seitliche Öffnung 6 im mit der Prothesenbasis 1 verbunden Zustand in koronaler Richtung über den Marginalsaum 7 hinausragt, so dass die basale Kavität 14 über die seitliche Öffnung 6 mit der Umgebung der Prothesenbasis 1 verbunden bleibt.

In einem dritten Arbeitsschritt 102 erfolgt die Herstellung der Prothesenbasis 1 anhand des in Schritt 100 berechneten virtuellen CAD-Modells der Prothesenbasis 1 oder es erfolgt eine Bereitstellung einer Prothesenbasis 1 mit bekannter äußerer Form, mit zumindest einer Aufnahme 10 für zumindest einen Zahnformkörper 2 und mit einem Zapfen 8 in der Aufnahme 10 für jede Aufnahme 10.

In einem vierten Arbeitsschritt 103 erfolgt eine Herstellung des zumindest einen Zahnformkörpers 2 oder eine basale Bearbeitung zumindest eines Zahnformkörpers 2 anhand des in Schritt 101 berechneten virtuellen CAD-Modells des zumindest einen Zahnformkörpers 2.

In einem fünften Arbeitsschritt 104 kann ein Klebstoff basal auf den zumindest einen Zahnformkörper 2 und/oder auf die Aufnahme(n) 10 der Prothesenbasis 1 aufgetragen werden. Zuvor kann auch eine Reinigung und/oder ein Aufrauen und/oder ein Anquellen der Aufnahme(n) 10 und/oder der basalen Seite 3 des zumindest einen Zahnformkörpers 2 erfolgen, um die Verbindung zwischen dem zumindest einen Zahnformkörper 2 und der Prothesenbasis 1 zu verbessern. Der Klebstoff wird dabei im Überschuss aufgetragen, das heißt, dass ein größeres Volumen an Klebstoff aufgetragen wird, als dass es der Zwischenraum zwischen dem Zahnformkörper 2 und der jeweiligen Aufnahme 10 erfordern würde.

Anschließend kann in einem sechsten Arbeitsschritt 105 der zumindest eine Zahnformkörper 2 in die Aufnahme(n) 10 der Prothesenbasis 1 eingesetzt werden, so dass der Zapfen 8 innerhalb der basalen Kavität 14 im zumindest einen Zahnformkörper 2 angeordnet ist.

Danach wird in einem siebten Arbeitsschritt 106 der zumindest eine Zahnformkörper 2 in die Aufnahme 10 gedrückt, wobei überschüssiger Klebstoff durch die seitliche Öffnung 6 im Mantel 5 des zumindest einen Zahnformkörpers 2 austritt.

Der ausgetretene Klebstoff kann in einem achten Arbeitsschritt 107 anschließend einfach entfernt werden. Die seitliche Öffnung 6 im Mantel 5 kann dabei auf der oralen Seite angeordnet sein, so dass der austretende Knochenzement dort leicht entfernt werden kann und die äußere ästhetische Erscheinung der Dentalprothese nicht beeinträchtigt wird.

In einem neunten Arbeitsschritt 108 kann der Klebstoff ausgehärtet werden und so der zumindest eine Zahnformkörper 2 endgültig mit der Prothesenbasis 1 verbunden werden. Anschließend kann optional noch eine Politur und Endreinigung der so erhaltenen Dentalprothese erfolgen.

### Bezugszeichenliste

- 1: Prothesenbasis
- 2: Zahnformkörper
- 3: basale Seite
- 4: koronale Oberfläche
- 5: Mantel
- 6: seitliche Öffnung
- 7: Marginalsaum
- 8: Zapfen
- 9: Deckfläche
- 10: Aufnahme
- 12: konische Übergangsfläche
- 14: basale Kavität
- 16: koronale Grundfläche
- 20: Dentalprothese für Oberkiefer
- 21: Prothesenbasis
- 22: Zahnformkörper
- 24: koronale Oberfläche
- 25: Mantel
- 27: Marginalsaum
- 30: Dentalprothese für Oberkiefer
- 31: Prothesenbasis
- 32: Zahnformkörper
- 34: koronale Oberfläche
- 35: Mantel
- 37: Marginalsaum
- 100: Arbeitsschritt: Berechnen eines virtuellen Modells einer Prothesenbasis
- 101: Arbeitsschritt: Erzeugen eines virtuellen Modells zumindest eines Zahnformkörpers
- 102: Arbeitsschritt: Herstellen oder Bereitstellen einer Prothesenbasis
- 103: Arbeitsschritt: Herstellen oder Bearbeiten zumindest eines Zahnformkörpers
- 104: Arbeitsschritt: Auftragen Klebstoff
- 105: Arbeitsschritt: Einsetzen des zumindest einen Zahnformkörpers
- 106: Arbeitsschritt: Eindrücken des zumindest einen Zahnformkörpers
- 107: Arbeitsschritt: Entfernen überschüssigen Klebstoffs
- 108: Arbeitsschritt: Aushärten Klebstoff und gegebenenfalls Nachbearbeitung

## Patentansprüche

1. Verfahren zur Herstellung von Dentalprothesen (20, 30) in Form von dentalen Teilprothesen oder Vollprothesen, wobei die Dentalprothese (20, 30) eine Prothesenbasis (1, 21, 31) und zumindest einen Zahnformkörper aufweist und wobei das Verfahren durch die folgenden Schritte gekennzeichnet ist:
A) Herstellen einer Prothesenbasis (1, 21, 31) aus einem zahnfleischfarbenen Kunststoff, wobei die Prothesenbasis (1, 21, 31) mit zumindest einer Aufnahme (10) für zumindest einen Zahnformkörper (2, 22, 32) erzeugt wird und wobei in der zumindest einen Aufnahme (10) ein vorstehender Zapfen (8) erzeugt wird, oder
Bereitstellen einer Prothesenbasis (1, 21, 31) aus einem zahnfleischfarbenen Kunststoff, wobei die Prothesenbasis (1, 21, 31) zumindest eine Aufnahme (10) für zumindest einen Zahnformkörper (2, 22, 32) aufweist und wobei in der zumindest einen Aufnahme (10) ein vorstehender Zapfen (8) angeordnet ist;
B) Herstellen oder basales Bearbeiten zumindest eines Zahnformkörpers (2, 22, 32), wobei in dem zumindest eine Zahnformkörper (2, 22, 32) eine basale Kavität (14) zur Aufnahme des Zapfens (8) erzeugt wird oder der zumindest eine Zahnformkörper (2, 22, 32) eine basale Kavität (14) zur Aufnahme des Zapfens (8) aufweist, wobei eine seitliche Öffnung (6) im Mantel (5, 25, 35) des zumindest einen Zahnformkörpers (2, 22, 32) erzeugt wird, so dass die basale Kavität (14) über die seitliche Öffnung (6) im Mantel (5, 25, 35) des zumindest einen Zahnformkörpers (2, 22, 32) zugänglich ist;
C) Nachfolgendes Auftragen eines Klebstoffs in die basale Kavität (14) des zumindest einen Zahnformkörpers (2, 22, 32) oder in die zumindest eine Aufnahme (10) der Prothesenbasis (1, 21, 31) oder in die basale Kavität (14) des zumindest einen Zahnformkörpers (2, 22, 32) und in die zumindest eine Aufnahme (10) der Prothesenbasis (1, 21, 31);
D) Nachfolgendes Einsetzen des zumindest einen Zahnformkörpers (2, 22, 32) in die zumindest eine Aufnahme (10) der Prothesenbasis (1, 21, 31), so dass der vorstehende Zapfen (8) innerhalb der basalen Kavität (14) angeordnet ist;
E) Nachfolgendes Eindrücken des zumindest einen Zahnformkörpers (2, 22, 32) in die zumindest eine Aufnahme (10) und Austreten von überschüssigem Klebstoff durch die seitliche Öffnung (6) im Mantel (5, 25, 35) des zumindest einen Zahnformkörpers (2, 22, 32), wobei die seitliche Öffnung (6) im Mantel (5, 25, 35) des zumindest einen Zahnformkörpers (2, 22, 32) zumindest bereichsweise in koronaler Richtung über einen angrenzenden Marginalsaum (7, 27, 37) der Prothesenbasis (1, 21, 31) vorsteht; und
F) Nachfolgendes Aushärten des Klebstoffs zur endgültigen Verbindung des zumindest einen Zahnformkörpers (2, 22, 32) mit der Prothesenbasis (1, 21, 31).

2. Verfahren nach Anspruch 1, **dadurch gekennzeichnet, dass**
in Schritt B) bei der Herstellung oder basalen Bearbeitung des zumindest einen Zahnformkörpers (2, 22, 32) und in Schritt A) bei der Herstellung der Prothesenbasis (1, 21, 31) ein Erzeugen oder Bereitstellen eines virtuellen 3D-Modells einer Dentalprothese (20, 30) mit einem virtuellen Modell der Prothesenbasis (1, 21, 31) als Zahnfleischimitat und mit zumindest einem virtuellen Modell von dem zumindest einem in der Prothesenbasis (1, 21, 31) anzuordnenden Zahnformkörper (2, 22, 32) zur Nachbildung zumindest eines Zahns erfolgt.

3. Verfahren nach Anspruch 2, **dadurch gekennzeichnet, dass**
die seitliche Öffnung (6) im Mantel (5, 25, 35) des zumindest einen Zahnformkörpers (2, 22, 32) in dem virtuellen Modell oder in den virtuellen Modellen im Rahmen des Verfahrens rechnerisch ergänzt wird, wobei bevorzugt die seitliche Öffnung (6) im Mantel (5, 25, 35) des zumindest einen Zahnformkörpers (2, 22, 32) derart ergänzt wird, dass die seitliche Öffnung (6) im Mantel (5, 25, 35) des zumindest einen Zahnformkörpers (2, 22, 32) in koronaler Richtung über den Marginalsaum (7, 27, 37) der Prothesenbasis (1, 21, 31) hinausragt, wenn der zumindest eine Zahnformkörper (2, 22, 32) vollständig in die ihm zugeordnete Aufnahme (10) eingesetzt ist, wobei besonders bevorzugt die seitliche Öffnung (6) im Mantel (5, 25, 35) des zumindest einen Zahnformkörpers (2, 22, 32) in koronaler Richtung zumindest 0,1 mm über den Marginalsaum (7, 27, 37) der Prothesenbasis (1, 21, 31) hinausragt, ganz besonders bevorzugt die seitliche Öffnung (6) im Mantel (5, 25, 35) des zumindest einen Zahnformkörpers (2, 22, 32) in koronaler Richtung zumindest 0,3 mm über den Marginalsaum (7, 27, 37) der Prothesenbasis (1, 21, 31) hinausragt.

4. Verfahren nach einem der vorangehenden Ansprüche **dadurch gekennzeichnet, dass** in Schritt E) der zumindest eine Zahnformkörper (2, 22, 32) bis zu einem Anschlag in die zumindest eine Aufnahme (10) eingedrückt wird, wobei vorzugsweise der Anschlag durch ein koronales Ende des Zapfens (8) und durch einen Gegenanschlag am koronalen Boden in der basalen Kavität (14) gebildet wird.

5. Verfahren nach einem der vorangehenden Ansprüche **dadurch gekennzeichnet, dass** beim Eindrücken des zumindest einen Zahnformkörpers (2, 22, 32) in die zumindest eine Aufnahme (10) in Schritt E) der Zapfen (8) in der basalen Kavität (14) geführt wird und der zumindest eine Zahnformkörper (2, 22, 32) dadurch relativ zur Prothesenbasis (1, 21, 31) ausgerichtet und positioniert wird.

6. Verfahren nach einem der vorangehenden Ansprüche **dadurch gekennzeichnet, dass** der Zapfen (8) der zumindest einen Aufnahme (10) und die basale Kavität (14) des zumindest einen Zahnformkörpers (2, 22, 32) mit abgerundeten Strukturen mit einem Krümmungsradius von zumindest 0,3 mm hergestellt wird oder abgerundete Strukturen mit einem Krümmungsradius von zumindest 0,3 mm aufweist, bevorzugt mit einem Krümmungsradius von zumindest 0,5 mm hergestellt wird oder einen Krümmungsradius von zumindest 0,5 mm aufweist.

7. Verfahren nach einem der vorangehenden Ansprüche **dadurch gekennzeichnet, dass** eine Deckfläche (9) des Zapfens (8) der zumindest einen Aufnahme (10) und eine koronale Grundfläche (16) in der basalen Kavität (14) des zumindest einen Zahnformkörpers (2, 22, 32) ein nicht rotationssymmetrisches Profil aufweisen oder mit einem nicht rotationssymmetrischen Profil hergestellt werden, oder
eine Deckfläche (9) des Zapfens (8) der zumindest einen Aufnahme (10) und eine koronale Grundfläche (16) in der basalen Kavität (14) des zumindest einen Zahnformkörpers (2, 22, 32) ein Omega-Profil aufweisen oder mit einem Omega-Profil hergestellt werden.

8. Verfahren nach einem der vorangehenden Ansprüche **dadurch gekennzeichnet, dass** die seitliche Öffnung (6) im Mantel (5, 25, 35) des zumindest einen Zahnformkörpers (2, 22, 32) approximal oder oral angeordnet ist, bevorzugt oral angeordnet ist.

9. Verfahren nach einem der vorangehenden Ansprüche **dadurch gekennzeichnet, dass** nach Schritt E) oder vor Schritt F) und nach Schritt E) der aus der seitlichen Öffnung (6) im Mantel (5, 25, 35) des zumindest einen Zahnformkörpers (2, 22, 32) ausgetretene Klebstoff entfernt wird.

10. Verfahren nach einem der vorangehenden Ansprüche **dadurch gekennzeichnet, dass** die seitliche Öffnung (6) im Mantel (5, 25, 35) des zumindest einen Zahnformkörpers (2, 22, 32) einen Querschnitt von zumindest 0,1 mm aufweist, bevorzugt einen Querschnitt von zumindest 0,3 mm aufweist, besonders bevorzugt einen Querschnitt von zumindest 0,5 mm aufweist, und/oder
die seitliche Öffnung (6) im Mantel (5, 25, 35) des zumindest einen Zahnformkörpers (2, 22, 32) einen Querschnitt von maximal 10 mm aufweist, bevorzugt einen Querschnitt von maximal 4 mm aufweist, besonders bevorzugt einen Querschnitt von maximal 2 mm aufweist.

11. Vorrichtung zum Umsetzen eines Verfahrens nach einem der vorangehenden Ansprüche, die Vorrichtung aufweisend
ein erstes Berechnungsmodul (40) zur Berechnung eines 3D-CAD-Modells einer Prothesenbasis (1, 21, 31) mit zumindest einer Aufnahme (10) zur Befestigung zumindest eines Zahnformkörpers (2, 22, 32), wobei in jeder der zumindest einen Aufnahme (10) vorstehende Zapfen (8) angeordnet sind,
ein zweites Berechnungsmodul (41) zur Berechnung zumindest eines virtuellen 3D-CAD-Modells des zumindest einen Zahnformkörpers (2, 22, 32) mit einer basalen Kavität (14) zur Aufnahme der Zapfen (8), wobei das zweite Berechnungsmodul (41) eine Berechnung von virtuellen 3D-Daten einer seitlichen Öffnung (6) im Mantel (5, 25, 35) des zumindest einen virtuellen 3D-CAD-Modells des zumindest einen Zahnformkörpers (2, 22, 32) durchführt, so dass bei vollständig in die Prothesenbasis (1, 21, 31) eingesetztem Zahnformkörper (2, 22, 32) die seitliche Öffnung (6) im Mantel (5, 25, 35) des zumindest einen Zahnformkörpers (2, 22, 32) zumindest bereichsweise in koronaler Richtung über einen angrenzenden Marginalsaum (7, 27, 37) der Prothesenbasis (1, 21, 31) vorsteht und die basale Kavität (14) mit der seitlichen Öffnung (6) im Mantel (5, 25, 35) des zumindest einen Zahnformkörpers (2, 22, 32) verbunden ist, und
eine Prothesenbasis-CAM-Vorrichtung (42) zur Herstellung der Prothesenbasis (1, 21, 31) nach Maßgabe des ersten Berechnungsmoduls (40) und/oder eine Zahnformkörper-CAM-Vorrichtung (43) zur Herstellung oder Bearbeitung des zumindest einen Zahnformkörpers (2, 22, 32) nach Maßgabe des zweiten Berechnungsmoduls (41).

12. Vorrichtung nach Anspruch 11 **dadurch gekennzeichnet, dass**
mit dem ersten Berechnungsmodul (40) eine Berechnung einer Deckfläche (9) am koronalen Ende des Zapfens (8) durchführbar ist und mit dem zweiten Berechnungsmodul (41) eine Berechnung einer zu der Deckfläche (9) passenden koronalen Grundfläche (16) in der basalen Kavität (14) des zumindest einen Zahnformkörpers (2, 22, 32) durchführbar ist.

13. Zahnformkörper (2, 22, 32) und Prothesenbasis (1, 21, 31) zur Herstellung einer Dentalprothese (20, 30), **dadurch gekennzeichnet, dass**
der Zahnformkörper (2, 22, 32) eine basale Kavität (14) und eine seitliche Öffnung (6) im Mantel (5, 25, 35) des Zahnformkörpers (2, 22, 32) aufweist, wobei die seitliche Öffnung (6) mit der basalen Kavität (14) verbunden ist, wobei
in der basalen Kavität (14) eine koronale Grundfläche (16) zum Positionieren des Zahnformkörpers (2, 22, 32) auf einem Zapfen (8) angeordnet ist, wobei die koronale Grundfläche (16) eine Indexierung oder ein nicht rotationssymmetrisches Profil aufweist, und wobei
die seitliche Öffnung (6) im Mantel (5, 25, 35) des Zahnformkörpers (2, 22, 32) derart weit in koronaler Richtung reicht, dass sie in einem in der Prothesenbasis (1, 21, 31) vollständig eingesetzten Zustand zumindest bereichsweise in koronaler Richtung über einen angrenzenden Marginalsaum (7, 27, 37) der Prothesenbasis (1, 21, 31) vorsteht.

14. Zahnformkörper (2, 22, 32) und Prothesenbasis (1, 21, 31) nach Anspruch 13, **dadurch gekennzeichnet, dass**
die koronale Grundfläche (16) eine Omega-Form aufweist.

15. Dentalprothese (20, 30) hergestellt mit einem Verfahren nach einem der Ansprüche 1 bis 10.

## Claims

1. A method for producing dental prostheses (20, 30) in the form of partial or full dental prostheses, wherein the dental prosthesis (20, 30) has a prosthetic base (1, 21, 31) and at least one dental molding and wherein the method is **characterized by** the following steps:
A) producing a prosthetic base (1, 21, 31) from a gum-colored plastics material, wherein the prosthetic base (1, 21, 31) is created with at least one receptacle (10) for at least one dental molding (2, 22, 32) and wherein a protruding pin (8) is created in the at least one receptacle (10), or
providing a prosthetic base (1, 21, 31) of a gum-colored plastics material, wherein the prosthetic base (1, 21, 31) has at least one receptacle (10) for at least one dental molding (2, 22, 32) and wherein a protruding pin (8) is arranged in the at least one receptacle (10);
B) producing or basally machining at least one dental molding (2, 22, 32), wherein a basal cavity (14) for receiving the pin (8) is created in the at least one dental molding (2, 22, 32) or the at least one dental molding (2, 22, 32) has a basal cavity (14) for receiving the pin (8), wherein a lateral opening (6) is created in the circumferential surface (5, 25, 35) of the at least one dental molding (2, 22, 32), such that the basal cavity (14) is accessible via the lateral opening (6) in the circumferential surface (5, 25, 35) of the at least one dental molding (2, 22, 32);
C) subsequently applying an adhesive into the basal cavity (14) of the at least one dental molding (2, 22, 32) or into the at least one receptacle (10) of the prosthetic base (1, 21, 31) or into the basal cavity (14) of the at least one dental molding (2, 22, 32) and into the at least one receptacle (10) of the prosthetic base (1, 21, 31);
D) subsequently inserting the at least one dental molding (2, 22, 32) into the at least one receptacle (10) of the prosthetic base (1, 21, 31), such that the protruding pin (8) is arranged inside the basal cavity (14);
E) subsequently pushing the at least one dental molding (2, 22, 32) into the at least one receptacle (10), and excess adhesive exiting through the lateral opening (6) in the circumferential surface (5, 25, 35) of the at least one dental molding (2, 22, 32), wherein the lateral opening (6) in the circumferential surface (5, 25, 35) of the at least one dental molding (2, 22, 32) protrudes at least in places in the coronal direction beyond an adjoining gingival margin (7, 27, 37) of the prosthetic base (1, 21, 31); and
F) subsequently curing the adhesive to definitively connect the at least one dental molding (2, 22, 32) to the prosthetic base (1, 21, 31).

2. The method according to Claim 1, **characterized in that**,
in step B), when producing or basally machining the at least one dental molding (2, 22, 32), and in step A), when producing the prosthetic base (1, 21, 31), a virtual 3D model of a dental prosthesis (20, 30) is created or provided with a virtual model of the prosthetic base (1, 21, 31) as imitation gum and with at least one virtual model of the at least one dental molding (2, 22, 32) to be arranged in the prosthetic base (1, 21, 31) to reproduce at least one tooth.

3. The method according to Claim 2, **characterized in that**
the lateral opening (6) in the circumferential surface (5, 25, 35) of the at least one dental molding (2, 22, 32) is added computationally in the virtual model or in the virtual models within the scope of the method, wherein preferably the lateral opening (6) is added in such a way in the circumferential surface (5, 25, 35) of the at least one dental molding (2, 22, 32) that the lateral opening (6) in the circumferential surface (5, 25, 35) of the at least one dental molding (2, 22, 32) projects in the coronal direction beyond the gingival margin (7, 27, 37) of the prosthetic base (1, 21, 31) when the at least one dental molding (2, 22, 32) is inserted fully into the receptacle (10) assigned thereto, wherein particularly preferably the lateral opening (6) in the circumferential surface (5, 25, 35) of the at least one dental molding (2, 22, 32) projects in the coronal direction by at least 0.1 mm beyond the gingival margin (7, 27, 37) of the prosthetic base (1, 21, 31), very particularly preferably the lateral opening (6) in the circumferential surface (5, 25, 35) of the at least one dental molding (2, 22, 32) projects in the coronal direction by at least 0.3 mm beyond the gingival margin (7, 27, 37) of the prosthetic base (1, 21, 31).

4. The method according to any one of the preceding claims, **characterized in that** in step E) the at least one dental molding (2, 22, 32) is pushed into the at least one receptacle (10) up to a limit stop, wherein the limit stop is preferably formed by a coronal end of the pin (8) and by a mating stop at the coronal base in the basal cavity (14).

5. The method according to any one of the preceding claims, **characterized in that**, on pushing the at least one dental molding (2, 22, 32) into the at least one receptacle (10), in step E) the pin (8) is guided in the basal cavity (14) and the at least one dental molding (2, 22, 32) is thereby oriented and positioned relative to the prosthetic base (1, 21, 31).

6. The method according to any one of the preceding claims, **characterized in that** the pin (8) of the at least one receptacle (10) and the basal cavity (14) of the at least one dental molding (2, 22, 32) is produced with rounded structures with a radius of curvature of at least 0.3 mm or has rounded structures with a radius of curvature of at least 0.3 mm, preferably is produced with a radius of curvature of at least 0.5 mm or has a radius of curvature of at least 0.5 mm.

7. The method according to any one of the preceding claims, **characterized in that** a top surface (9) of the pin (8) of the at least one receptacle (10) and a coronal base surface (16) in the basal cavity (14) of the at least one dental molding (2, 22, 32) have a non-rotationally symmetrical profile or are produced with a non-rotationally symmetrical profile, or
a top surface (9) of the pin (8) of the at least one receptacle (10) and a coronal base surface (16) in the basal cavity (14) of the at least one dental molding (2, 22, 32) have an omega-shaped profile or are produced with an omega-shaped profile.

8. The method according to any one of the preceding claims, **characterized in that** the lateral opening (6) is arranged in the circumferential surface (5, 25, 35) of the at least one dental molding (2, 22, 32) approximally or orally, preferably is arranged orally.

9. The method according to any one of the preceding claims, **characterized in that** the adhesive exiting from the lateral opening (6) in the circumferential surface (5, 25, 35) of the at least one dental molding (2, 22, 32) is removed after step E) or before step F) and after step E).

10. The method according to any one of the preceding claims, **characterized in that** the lateral opening (6) in the circumferential surface (5, 25, 35) of the at least one dental molding (2, 22, 32) has a cross-section of at least 0.1 mm, preferably a cross-section of at least 0.3 mm, particularly preferably a cross-section of at least 0.5 mm and/or
the lateral opening (6) in the circumferential surface (5, 25, 35) of the at least one dental molding (2, 22, 32) has a cross-section of at most 10 mm, preferably a cross-section of at most 4 mm, particularly preferably a cross-section of at most 2 mm.

11. A device for implementing a method according to any one of the preceding claims, the device having
a first calculation module (40) for calculating a 3D CAD model of a prosthetic base (1, 21, 31) with at least one receptacle (10) for attachment of at least one dental molding (2, 22, 32), wherein protruding pins (8) are arranged in each of the at least one receptacle (10),
a second calculation module (41) for calculating at least one virtual 3D CAD model of the at least one dental molding (2, 22, 32) with a basal cavity (14) for receiving the pins (8), wherein the second calculation module (41) carries out calculation of virtual 3D data of a lateral opening (6) in the circumferential surface (5, 25, 35) of the at least one virtual 3D CAD model of the at least one dental molding (2, 22, 32), such that when the dental molding (2, 22, 32) has been fully inserted into the prosthetic base (1, 21, 31), the lateral opening (6) in the circumferential surface (5, 25, 35) of the at least one dental molding (2, 22, 32) protrudes at least in places in the coronal direction beyond an adjacent gingival margin (7, 27, 37) of the prosthetic base (1, 21, 31) and the basal cavity (14) is connected with the lateral opening (6) in the circumferential surface (5, 25, 35) of the at least one dental molding (2, 22, 32), and
a prosthetic base CAM device (42) for producing the prosthetic base (1, 21, 31) in line with the first calculation module (40) and/or a dental molding CAM device (43) for producing or machining the at least one dental molding (2, 22, 32) in line with the second calculation module (41).

12. The device according to Claim 11, **characterized in that**
the first calculation module (40) may be used to calculate a top surface (9) at the coronal end of the pin (8) and the second calculation module (41) may be used to calculate a coronal base surface (16) in the basal cavity (14) of the at least one dental molding (2, 22, 32) which matches the top surface (9).

13. A dental molding (2, 22, 32) and prosthetic base (1, 21, 31) for producing a dental prosthesis (20, 30), **characterized in that**
the dental molding (2, 22, 32) has a basal cavity (14) and a lateral opening (6) in the circumferential surface (5, 25, 35) of the dental molding (2, 22, 32), wherein the lateral opening (6) is connected to the basal cavity (14), wherein
a coronal base surface (16) is arranged in the basal cavity (14) for positioning the dental molding (2, 22, 32) on a pin (8), wherein the coronal base surface (16) has indexing or a non-rotationally symmetrical profile, and wherein
the lateral opening (6) in the circumferential surface (5, 25, 35) of the dental molding (2, 22, 32) extends so far in the coronal direction that, when fully inserted in the prosthetic base (1, 21, 31), it protrudes at least in places in the coronal direction beyond an adjoining gingival margin (7, 27, 37) of the prosthetic base (1, 21, 31).

14. The dental molding (2, 22, 32) and prosthetic base (1, 21, 31) according to Claim 13, **characterized in that**
the coronal base surface (16) has an omega shape.

15. A dental prosthesis (20, 30) produced using with a method according to any one of Claims 1 through 10.

## Revendications

1. Procédé de production de prothèses dentaires (20, 30) sous la forme de prothèses dentaires partielles ou complètes, dans lequel la prothèse dentaire (20, 30) a une base de prothèse (1, 21, 31) et au moins un élément dentaire moulé, et dans lequel le procédé est **caractérisé par** les étapes suivantes :
A) production d'une base de prothèse (1, 21, 31) à partir d'un matériau plastique de couleur gingivale, dans lequel la base de prothèse (1, 21, 31) est créée avec au moins un réceptacle (10) pour au moins un élément dentaire moulé (2, 22, 32) et dans lequel un tenon saillant (8) est créé dans l'au moins un réceptacle (10), ou
fourniture d'une base de prothèse (1, 21, 31) en matériau plastique de couleur gingivale, dans lequel la base de prothèse (1, 21, 31) a au moins un réceptacle (10) pour au moins un élément dentaire moulé (2, 22, 32) et dans lequel un tenon saillant (8) est agencé dans l'au moins un réceptacle (10) ;
B) production ou usinage basal d'au moins un élément dentaire moulé (2, 22, 32), dans lequel une cavité basale (14) pour recevoir le tenon (8) est créée dans l'au moins un élément dentaire moulé (2, 22, 32) ou l'au moins un élément dentaire moulé (2, 22, 32) a une cavité basale (14) pour recevoir le tenon (8), dans lequel une ouverture latérale (6) est créée dans la surface circonférentielle (5, 25, 35) de l'au moins un élément dentaire moulé (2, 22, 32), de sorte que la cavité basale (14) soit accessible via l'ouverture latérale (6) dans la surface circonférentielle (5, 25, 35) de l'au moins un élément dentaire moulé (2, 22, 32) ;
C) application subséquente d'un adhésif dans la cavité basale (14) de l'au moins un élément dentaire moulé (2, 22, 32) ou dans au moins un réceptacle (10) de la base de prothèse (1, 21, 31) ou dans la cavité basale (14) de l'au moins un élément dentaire moulé (2, 22, 32) et dans l'au moins un réceptacle (10) de la base de prothèse (1, 21, 31) ;
D) insertion subséquente de l'au moins un élément dentaire moulé (2, 22, 32) dans l'au moins un réceptacle (10) de la base de prothèse (1, 21, 31), de sorte que le tenon saillant (8) soit agencé à l'intérieur de la cavité basale (14) ;
E) poussée subséquente de l'au moins un élément dentaire moulé (2, 22, 32) dans l'au moins un réceptacle (10), et sortie de l'excédent d'adhésif à travers l'ouverture latérale (6) dans la surface circonférentielle (5, 25, 35) de l'au moins un élément dentaire moulé (2, 22, 32), dans lequel l'ouverture latérale (6) dans la surface circonférentielle (5, 25, 35) de l'au moins un élément dentaire moulé (2, 22, 32) fait saillie au moins par endroits dans la direction coronale au-delà d'une marge gingivale adjacente (7, 27, 37) de la base de prothèse (1, 21, 31) ; et
F) durcissement subséquent de l'adhésif pour relier définitivement l'au moins un élément dentaire moulé (2, 22, 32) à la base de prothèse (1, 21, 31).

2. Procédé selon la revendication 1, **caractérisé en ce que**,
à l'étape B), lors de la production ou de l'usinage basal de l'au moins un élément dentaire moulé (2, 22, 32), et à l'étape A), lors de la production de la base de prothèse (1, 21, 31), un modèle 3D virtuel d'une prothèse dentaire (20, 30) est créé ou fourni avec un modèle virtuel de la base de prothèse (1, 21, 31) comme gencive artificielle et avec au moins un modèle virtuel de l'au moins un élément dentaire moulé (2, 22, 32) à agencer dans la base de prothèse (1, 21, 31) pour reproduire au moins une dent.

3. Procédé selon la revendication 2, **caractérisé en ce que** l'ouverture latérale (6) dans la surface périphérique (5, 25, 35) de l'au moins un élément dentaire moulé (2, 22, 32) est ajoutée par calcul dans le modèle virtuel ou dans les modèles virtuels dans le cadre du procédé, dans lequel de préférence l'ouverture latérale (6) est ajoutée dans la surface circonférentielle (5, 25, 35) de l'au moins un élément dentaire moulé (2, 22, 32) de sorte que l'ouverture latérale (6) dans la surface circonférentielle (5, 25, 35) de l'au moins un élément dentaire moulé (2, 22, 32) fasse saillie dans la direction coronale au-delà de la marge gingivale (7, 27, 37) de la base de prothèse (1, 21, 31) lorsque l'au moins un élément dentaire moulé (2, 22, 32) est entièrement inséré dans le réceptacle (10) qui lui est attribué, dans lequel, de manière particulièrement préférée, l'ouverture latérale (6) dans la surface circonférentielle (5, 25, 35) de l'au moins un élément dentaire moulé (2, 22, 32) fait saillie dans la direction coronale d'au moins 0,1 mm au-delà de la marge gingivale (7, 27, 37) de la base de prothèse (1, 21, 31), et, de manière tout particulièrement préférée, l'ouverture latérale (6) dans la surface circonférentielle (5, 25, 35) de l'au moins un élément dentaire moulé (2, 22, 32) fait saillie dans la direction coronale d'au moins 0,3 mm au-delà de la marge gingivale (7, 27, 37) de la base de prothèse (1, 21, 31).

4. Procédé selon l'une quelconque des revendications précédentes, **caractérisé en ce que**, à l'étape E), l'au moins un élément dentaire moulé (2, 22, 32) est poussé dans l'au moins un réceptacle (10) jusqu'à une butée de limitation, dans lequel la butée de limitation est de préférence formée par une extrémité coronale du tenon (8) et par une butée d'accouplement au niveau de la base coronale dans la cavité basale (14).

5. Procédé selon l'une quelconque des revendications précédentes, **caractérisé en ce que**, lors de la poussée de l'au moins un élément dentaire moulé (2, 22, 32) dans l'au moins un réceptacle (10), à l'étape E), le tenon (8) est guidé dans la cavité basale (14) et l'au moins un élément dentaire moulé (2, 22, 32) est ainsi orienté et positionné par rapport à la base de prothèse (1, 21, 31).

6. Procédé selon l'une quelconque des revendications précédentes, **caractérisé en ce que** le tenon (8) de l'au moins un réceptacle (10) et la cavité basale (14) de l'au moins un élément dentaire moulé (2, 22, 32) sont produits avec des structures arrondies ayant un rayon de courbure d'au moins 0,3 mm ou ont des structures arrondies ayant un rayon de courbure d'au moins 0,3 mm, de préférence sont produits avec un rayon de courbure d'au moins 0,5 mm ou ont un rayon de courbure d'au moins 0,5 mm.

7. Procédé selon l'une quelconque des revendications précédentes, **caractérisé en ce que** la surface supérieure (9) du tenon (8) de l'au moins un réceptacle (10) et la surface de base coronale (16) dans la cavité basale (14) de l'au moins un élément dentaire moulé (2, 22, 32) ont un profil non symétrique par rotation ou sont produites avec un profil non symétrique par rotation, ou
la surface supérieure (9) du tenon (8) de l'au moins un réceptacle (10) et la surface de base coronale (16) dans la cavité basale (14) de l'au moins un élément dentaire moulé (2, 22, 32) ont un profil en forme d'oméga ou sont produites avec un profil en forme d'oméga.

8. Procédé selon l'une quelconque des revendications précédentes, **caractérisé en ce que** l'ouverture latérale (6) est agencée dans la surface circonférentielle (5, 25, 35) de l'au moins un élément dentaire moulé (2, 22, 32) du côté approximal ou oral, de préférence est agencée du côté oral.

9. Procédé selon l'une quelconque des revendications précédentes, **caractérisé en ce que** l'adhésif sortant de l'ouverture latérale (6) dans la surface circonférentielle (5, 25, 35) de l'au moins un élément dentaire moulé (2, 22, 32) est enlevé après l'étape E) ou avant l'étape F) et après l'étape E).

10. Procédé selon l'une quelconque des revendications précédentes, **caractérisé en ce que** l'ouverture latérale (6) dans la surface circonférentielle (5, 25, 35) de l'au moins un élément dentaire moulé (2, 22, 32) a une section transversale d'au moins 0,1 mm, de préférence une section transversale d'au moins 0,3 mm, et plus particulièrement de préférence une section transversale d'au moins 0,5 mm et/ou
l'ouverture latérale (6) dans la surface circonférentielle (5, 25, 35) de l'au moins un élément dentaire moulé (2, 22, 32) a une section transversale d'au plus 10 mm, de préférence une section transversale d'au plus 4 mm, et plus particulièrement de préférence une section transversale d'au plus 2 mm.

11. Dispositif de mise en œuvre d'un procédé selon l'une quelconque des revendications précédentes, le dispositif ayant
un premier module de calcul (40) pour calculer un modèle CAD 3D d'une base de prothèse (1, 21, 31) avec au moins un réceptacle (10) pour la fixation d'au moins un élément dentaire moulé (2, 22, 32), dans lequel des tenons saillants (8) sont agencés dans chacun de l'au moins un réceptacle (10),
un second module de calcul (41) pour calculer au moins un modèle CAD 3D virtuel de l'au moins un élément dentaire moulé (2, 22, 32) avec une cavité basale (14) pour recevoir les tenons (8), dans lequel le second module de calcul (41) réalise le calcul de données 3D virtuelles d'une ouverture latérale (6) dans la surface circonférentielle (5, 25, 35) de l'au moins un modèle CAD 3D virtuel de l'au moins un élément dentaire moulé (2, 22, 32), de sorte que, lorsque l'élément dentaire moulé (2, 22, 32) a été entièrement inséré dans la base de prothèse (1, 21, 31), l'ouverture latérale (6) dans la surface circonférentielle (5, 25, 35) de l'au moins un élément dentaire moulé (2, 22, 32) fasse saillie, au moins par endroits, dans la direction coronale au-delà d'une marge gingivale adjacente (7, 27, 37) de la base de prothèse (1, 21, 31) et la cavité basale (14) soit reliée à l'ouverture latérale (6) dans la surface circonférentielle (5, 25, 35) de l'au moins un élément dentaire moulé (2, 22, 32), et
un dispositif CAM de base de prothèse (42) pour produire la base de prothèse (1, 21, 31) conformément au premier module de calcul (40) et/ou un dispositif CAM d'élément dentaire moulé (43) pour produire ou usiner l'au moins un élément dentaire moulé (2, 22, 32) conformément au second module de calcul (41).

12. Dispositif selon la revendication 11, **caractérisé en ce que**
le premier module de calcul (40) peut être utilisé pour calculer une surface supérieure (9) au niveau de l'extrémité coronale du tenon (8) et le second module de calcul (41) peut être utilisé pour calculer une surface de base coronale (16) dans la cavité basale (14) de l'au moins un élément dentaire moulé (2, 22, 32) qui correspond à la surface supérieure (9).

13. Élément dentaire moulé (2, 22, 32) et base de prothèse (1, 21, 31) pour la production d'une prothèse dentaire (20, 30), **caractérisés en ce que**
l'élément dentaire moulé (2, 22, 32) a une cavité basale (14) et une ouverture latérale (6) dans la surface circonférentielle (5, 25, 35) de l'élément dentaire moulé (2, 22, 32), dans lesquels l'ouverture latérale (6) est reliée à la cavité basale (14), dans lesquels
une surface de base coronale (16) est agencée dans la cavité basale (14) pour positionner l'élément dentaire moulé (2, 22, 32) sur un tenon (8), dans lesquels la surface de base coronale (16) a un profil indexé ou non symétrique par rotation, et dans lesquels
l'ouverture latérale (6) dans la surface circonférentielle (5, 25, 35) de l'élément dentaire moulé (2, 22, 32) s'étend si loin dans la direction coronale que, lorsqu'elle est entièrement insérée dans la base de prothèse (1, 21, 31), elle fait saillie au moins par endroits dans la direction coronale au-delà d'une marge gingivale adjacente (7, 27, 37) de la base de prothèse (1, 21, 31).

14. Élément dentaire moulé (2, 22, 32) et base de prothèse (1, 21, 31) selon la revendication 13, **caractérisés en ce que**
la surface de base coronale (16) a une forme oméga.

15. Prothèse dentaire (20, 30) produite en utilisant un procédé selon l'une quelconque des revendications 1 à 10.
